# EUROPEAN PATENT APPLICATION

(11) **EP 4 674 245 A1**
(43) Date of publication of application: **07.01.2026**
(21) Application number: 25179018.4
(22) Date of filing: 27.05.2025
(51) Int. Cl.: A01B 69/04, A01F 15/08

(54) **AGRICULTURAL MACHINE**

(30) Priority: 05.07.2024 GB 202409798
(71) Applicant: Kuhn-Geldrop B.V., 5667 KP Geldrop (NL)
(72) Inventor: PETERS, Jorn, 5246CG Rosmalen (NL)
(74) Representative: Murgitroyd & Company

(57) **Abstract**

An agricultural machine (1) arranged to perform an agricultural field operation comprising picking up harvested crop from a swath, the agricultural machine (1) comprising: a pick-up mechanism (3) arranged to pick up the harvested crop from the swath, the pick-up mechanism (3) having a working width (W) that defines a physical working width (W) of the agricultural machine; and a recording system (18) arranged to record a worked area of the field as the agricultural machine performs the field operation, wherein the recording system (18) is arranged to determine the worked area from a virtual working width for the agricultural machine (1), which is greater than the physical working width (W) of the agricultural machine, such that at least part of the worked area recorded by the recording system (18) is located beyond the physical working width (W) of the agricultural machine.

## Description

### FIELD OF THE INVENTION

The present invention relates to an agricultural machine and a method for performing an agricultural field operation.

### BACKGROUND OF THE INVENTION

Agricultural machines can perform agricultural field operations. Examples of these field operations are cultivating, ploughing, seeding, fertilizing, spraying, and harvesting. Typically, when an agricultural machine is performing such a field operation, the worked area of the field, the area worked by the agricultural machine may be recorded into the control unit or controller of the agricultural machine, for use in the same or another field operation.

When for example a seeder or cultivator is performing the field operation, the worked area is depending on the working width of the seeder or cultivator. The working width of the cultivator or seeder is for example 6 meters wide and this working width is multiplied by the distance travelled by the tractor-seeder/cultivator while performing the field operation and thus a worked area can be calculated/determined. The calculated worked area is associated with GPS coordinates, for example provided by a GPS receiver system located on the tractor or agricultural machine, so GPS coordinates of the worked area are stored in the memory of the controller of the agricultural machine or stored in the memory of the controller of a tractor which is towing the agricultural machine or stored in a tractor and agricultural machine independent controller. In this way, the controller of the agricultural machine or tractor "knows" during performing the field operation where it already has performed the field operation (worked area).

The working width of an agricultural machine is typically oriented perpendicular to the direction of motion of the agricultural machine as the agricultural machine performs the field operation.

This worked area information can be used, for example, when a seeder is approaching an area that is designated or recorded as worked area. In case the seeder is approaching a zone recorded as worked area, the seeder can automatically lift either one or a selected number of seed-units, or can lift the complete machine. This in order to prevent the worked area being sown twice. This saves on cost of valuable seeds and of fuel for the tractor. The same example for a cultivator, when the cultivator is approaching an area that is designated or recorded as a worked area, the cultivator can lift itself automatically from the ground. This saves the cost of valuable fuel used in the tractor. Also, it may contribute to less wear of soil entering parts of the cultivator as these parts only enter the soil when needed. Moreover, in both examples, the driver does not have to pay attention to lifting and lowering the seeder or cultivator and thus the driver can pay attention to driving and steering the tractor. Having fewer actions to pay attention to leads to a less stressful and thus more comfortable working time for the driver of the tractor or the agricultural machine.

Typically, recording the worked area for agricultural field operations such as seeding, cultivation, ploughing, spraying, and fertilizing is directly coupled or related to the physical working width of the agricultural machine used. In several, but not necessarily all, field harvesting operations this may cause problems. For harvesting-field-operations comprising an agricultural machine like a combine-harvester, mower or windrower/rake the recorded worked area is directly related to the physical working width of the agricultural machine used. However, for harvesting-field-operations comprising a baler, a loading wagon, or a forage harvester, the worked width may be larger than the actual physical working width of the baler, loading wagon or forage harvester. In some embodiments the baler may be included in a baler-wrapper combination.

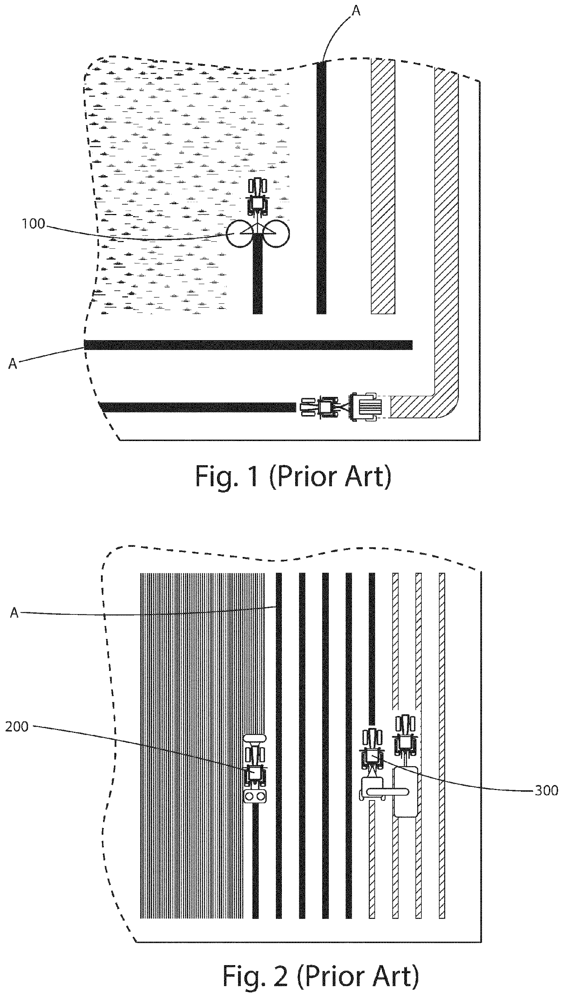

Typically, a preceding agricultural machine performs a field operation before a baler, baler-wrapper combination, loading wagon or forage harvester performs its field operation. The preceding field operation can be, for example a rake or windrower 100 raking crops from a certain area together in a swath A (see Figure 1). Therefore, the baler, baler-wrapper combination, loading wagon or forage harvester does not need to travel the whole field, but only needs to travel where the swaths are located. Another example of such a harvesting field operation where crops are picked up from swaths may be a multiphase harvesting field operation of for example sugar beet or potatoes, where a preceding agricultural machine 200 is used for digging the sugar beet or potato crops from the ground and putting them in swaths A, and another agricultural machine 300 picks up the crops from the laid swaths A (see Figure 2).

Thus, typically harvesting machines that pick up crops laid down on the field in swaths, are working a larger area than the working area as calculated as the product of the working width of the harvesting machine (baler, baler-wrapper combination, loading wagon forage harvester) and the travelled distance of the harvesting machine.

That is, the pick-up of a baler, baler-wrapper combination, loading wagon or forage harvester is typically 2 to 3 meters wide, whereas the swath typically contains crop from a wider width than the working width of 2 to 3 metres. A swath for a baler, baler-wrapper combination, loading wagon or forage harvester can contain crop from a width of for example 15 metres. This 15 metre width is the working width of the rake or windrower that has raked the harvested crops together into the swath that is to be picked up by a 2 to 3 metre wide pick-up of a baler, baler-wrapper combination, loading wagon or forage harvester (see Figure 1). In this case the swath comprising the raked harvested crops is narrower than the working width of the baler, baler-wrapper combination, loading wagon or forage harvester.

In the example of a combine-harvester, it is not uncommon for the combine-harvester to mow crops at a certain working width, separate the mowed crops in grains and straw inside the combine-harvester and deposit the straw in a swath on the ground. The swath comprising the straw is narrower than the working width of the combine-harvester. Typically the straw is picked up by a baler for pressing the straw into bales. In this case, the actual working width of the baler is equal to the working width of the preceding agricultural machine, in this example being a combine-harvester.

In the example of the multiphase sugar beet or potato harvester a similar situation occurs, crops are dug from the ground and laid in swaths. Swaths comprising sugar beet or potatoes are typically narrower than the working width of the harvester which dug out the crop from the ground (see Figure 2). The crops in the swath are typically picked up by a collector, collecting the crops in a wagon after picking them up from the swath. In this case the actual working width of the collector is equal to the working width of the preceding agricultural machine, in this example being a sugar beet or potato digger.

Therefore, in some of the above examples, the actual worked area of an agricultural machine for performing an agricultural field operation comprising picking up of crops from a swath, may be substantially equal to the working width of the preceding agricultural machine.

The prior art discloses solutions for recording the correct worked area for an agricultural field operation comprising picking up crops from a swath that is narrower than the working width of a preceding agricultural field operation.

For example, the recorded worked area of the preceding field operation is shared with the agricultural machine performing the later field operation. The worked area of the preceding field operation may be recorded in a field map and the information from the field map may be used when determining/recording the correct worked area of the later field operation. However, in some conditions or situations, sharing data from a preceding field operation is not possible. For example, when the field operation has taken place in a remote area, a connection, such as a telecommunications link, for sharing data may not be possible or available. Another example is that the shared data from the machine performing the preceding field operation may not be readable by the machine performing the later field operation. Another example is that the machine performing the preceding field operation does not have the ability to record its worked area, and therefore no data is available to share with the machine performing the later field operation. The latter case may occur, for example when the preceding field operation is done by a farmer and the later field operation, such as baling, is done by a contractor. It may be possible that the farmer's agricultural machine may not have possibility to record worked area or make a field map.

Thus there is a need for a system where it is possible to record the correct worked area of an agricultural field operation, independently of preceding agricultural field operations.

In agriculture, the ISOBUS ISO11783, known as "Tractors and machinery for agriculture and forestry - Serial control and communications data network" (commonly referred to as "ISOBUS") is a communication protocol for the agriculture industry based on, and harmonized with, the SAE J1939 protocol (which is based on the CAN bus).

Part 10 of the ISOBUS ISO 11783 (ISO 11783-10) is defined as "Task controller and management information system data interchange - prescription application and data logging of implement operation." Part of the Task controller (TC) is Section Control (SC). The functionality of SC is generally defined as the recording of device element geographic position, and subsequent on/off control when the device element encounters the previous or a specific position in the field to avoid overlapping. TC-SC requires a position source such as a GPS receiver connected to the TC. However, ISO 11783 does not define if the overlapping is headland or field boundary or origination from a previous agricultural operation. Also, the number of sections or the number of booms or the position of the sections related to a fixed point (GPS antenna for example) are not defined. Also, not defined in the ISO 11783 TC-SC standard is the existence of TC-SC sections outside the physical working width of the agricultural machine.

TC-SC allows the operator of the agricultural machine to define the working width of an agricultural machine into multiple sections. The sections may be virtually positioned as an overlay over the working width of the agricultural machine and may be referenced by a local coordinate system within the agricultural machine relative to the GPS receiver of the agricultural machine or the tractor. For example, a virtual boom of virtual sections is positioned as an overlay on a spraying boom of an agricultural sprayer for spraying field operations. The sprayer boom is of a certain length. The physical length of the boom is the maximum working width of the sprayer. The boom is divided into multiple sections, each section may be controlled to spray or not-spray the field. When a section is set to spray the field, that section is included in the worked area recording. Further, TC-SC can detect whether a section is in a worked or in a non-worked area. TC may return a signal representing a section is in a worked area or is in a non-worked area (less than 100% in worked area including 0% in worked area). So only two conditions may be distinguished, 100% in worked area and not 100% in worked area. That is, the TC-SC is configured to return a signal equal to a non-worked area in the situation where a section is partly in a worked area and partly in a non-worked area, and thus can decide to turn on or off spraying for that section.

So when a section of the sprayer boom example enters an already worked area, the TC-SC functionality can detect that, and when that section is in the worked area, the section can be controlled to not-spray the field. TC-SC in this case prevents the already worked area from being spayed twice, which saves on fuel, spray liquids and causes less environmental damage to the field.

For a baler, such a signal of what section is in a worked area can be used for example to lift the pick-up (automatically by the controller) whenever the baler is in an already worked area. Subsequently, when the baler is approaching a non-worked area, the pick-up can be lowered again so crop from swaths is taken into the baler again. Other functions of the baler besides the lifting and lowering of the pick-up may be triggered, like PTO speed decrease/ increase; PTO stop/start; rotor knife cleaning.

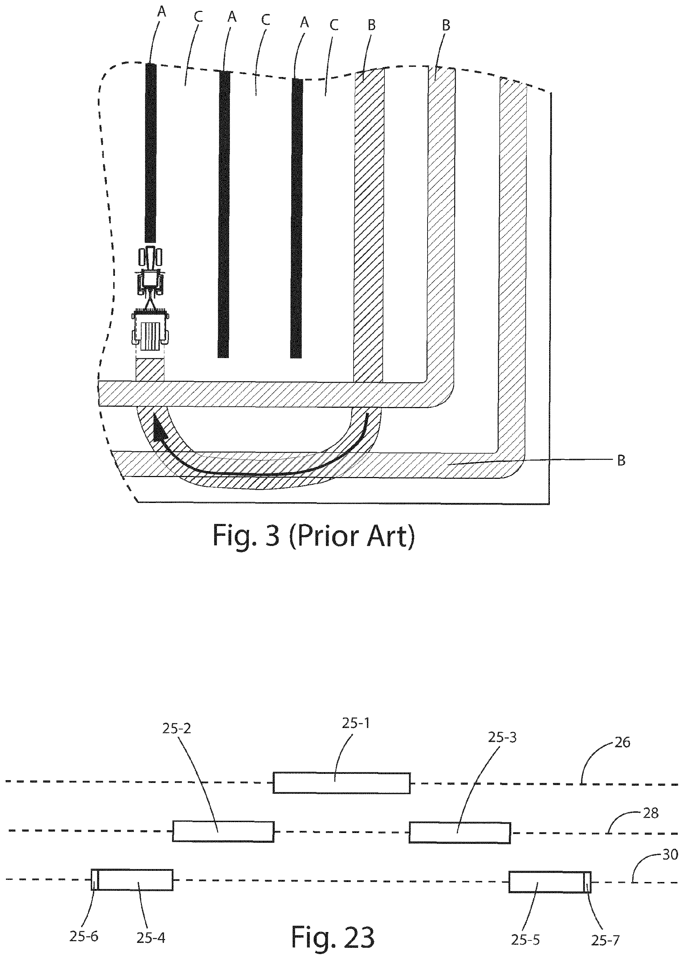

The inventors have determined that when using one section according to the physical working width of the baler, which for a baler is typically the width of the pick-up mechanism, this leads to a problem that the correct worked area is not recorded. This is illustrated in Figure 3. Figure 3 shows: three remaining swaths A, which are yet to be picked up by the baler; areas B that the baler has already traversed by the baler and are recorded as worked area; and significant areas C of land where the crop has been removed from the ground, for example in a previous crop removal operation and which also laid the crop in swaths, which are not recorded as worked area by the baler. Such areas of land can be located, for example between adjacent swaths. Having significant areas C of land which are not recorded as worked area, and where no further working is required, can cause functions of the baler, like automatic pick-up lifting/lowering, occurring at positions where it should not occur.

The inventors have also determined that, under some circumstances, it is possible that gaps are created between worked areas during the field operation when there are no crops to be gathered from those gaps. For example, if an operator of the agricultural machine, such as a baler, undertakes a weaving pattern when collecting the swath to provide even bales, the weaving pattern can lead to periodic gaps between the recorded worked areas. It is undesirable for those gaps to be identified as non-worked areas when there are no crops to be gathered from those gaps. It is desirable to address this problem.

Accordingly, the invention seeks to provide an agricultural machine that mitigates at least one of the above-mentioned problems, or at least provides an alternative agricultural machine to known agricultural machines. The invention also seeks to provide a method for performing an agricultural field operation by an agricultural machine that mitigates at least one of the afore-mentioned problems, or at least provides an alternative method to known methods.

### SUMMARY OF INVENTION

According to one aspect of the invention there is provided an agricultural machine according to claim 1.

The invention enables the agricultural machine to record as worked area, certain areas of the field that have been harvested by a harvester to remove crop from the soil, when the agricultural machine performing the field operation has not physically worked those areas. For example, the invention enables an agricultural machine, such as a baler, baler-wrapper combination, loading wagon or forage harvester to record as worked area, areas of the field that are located between adjacent swaths that the agricultural machine itself has not worked when performing the field operation. In some embodiments the virtual working width can be set, for example, as the distance between two adjacent swaths. The inventors have determined that it is possible to define one or more virtual sections which extend beyond the physical working width of the agricultural machine. This is especially useful for an agricultural machine which has a larger effective working width compared to its physical working width. Projecting virtual sections outside of, or beyond its physical working width is advantageous, since it enables the agricultural machine to record a larger area as worked area. Collecting data on worked area can be used for statistics like total worked area, yield maps for yield amount and yield quality depending on location in the field, for example in combination with other data like crop weight, crop moisture.

According to another aspect there is provided an agricultural machine arranged to perform an agricultural field operation comprising picking up harvested crop from a swath.

The agricultural machine can comprise a pick-up mechanism arranged to pick up the harvested crop from the swath. The pick-up mechanism can have a working width that defines a physical working width of the agricultural machine.

The agricultural machine can include a recording system arranged to record a worked area of the field as the agricultural machine performs the field operation. The recording system can be arranged to determine the worked area from a virtual working width for the agricultural machine. The virtual working width can be greater than the physical working width of the agricultural machine, such that at least part of the worked area recorded by the recording system is located beyond the physical working width of the agricultural machine.

The working width of the pick-up mechanism, and hence the physical working width of the agricultural machine, can be defined by the axial length of the pick-up device since a central longitudinal axis of the pick-up mechanism extends transversely across the width of the agricultural machine. That is, the length of the pick-up mechanism is arranged perpendicular to the direction of travel of the agricultural machine when performing the field operation.

The virtual working width of the agricultural machine can be defined by at least one virtual boom section. The virtual boom section has a length. The virtual working width of the agricultural machine can be defined by the length of the virtual boom section. Typically, a longitudinal axis of the virtual boom section is oriented perpendicular to the direction of motion of the agricultural machine as the agricultural machine performs the field operation. Typically, the longitudinal axis of the virtual boom section is oriented parallel with the physical working width of the agricultural machine, for example parallel to the central longitudinal axis of the pick-up mechanism.

It is possible to use only a single virtual boom section for recording worked area. The single virtual boom section has a length that is wider than the physical working width of the agricultural machine and preferably the length of the single virtual boom section corresponds to the distance between the swaths on the field. The distance between the swaths on the field, and thus the width of the single virtual boom section, can be variable. However, using only one virtual boom section may lead to a problem when performing actions like automatic pick-up device lift and lowering. It is possible that the recording system returns a signal if the virtual boom section is in a previously worked area. The signal is different from when the virtual boom section is in a non-worked area. The signals can be coupled to operational actions of the agricultural machine, such as automatic lifting and lowering of the pick-up mechanism, which are performed as stated above. Using only one virtual boom section, which is wider than the physical working width of the agricultural machine may trigger false signals (signals not meant to be sent) and thus trigger operational actions at moments where those actions are not meant to occur. Typically, when the virtual boom section is 100% in a previously worked area, it is desirable to have the pick-up mechanism lifted from the ground.

When the virtual boom section is not 100% is the previously worked area, the pick-up mechanism is lowered, as only two possible values can be returned by the recording system. Accordingly, when using one large virtual boom section for recording a worked area beyond the physical working width of the agricultural machine, it is much more critical to automatically operate the pick-up mechanism, because every time the single large virtual boom section enters part of the non-worked area, the pick-up mechanism will be lowered.

The virtual working width of the agricultural machine can be defined by a plurality of virtual boom sections. Each virtual boom section has a length. The virtual working width of the agricultural machine can be defined by the sum of the lengths of the plurality of virtual boom sections. Typically, a longitudinal axis of each virtual boom section is oriented perpendicular to the direction of motion of the agricultural machine as the agricultural machine performs the field operation. Typically, the longitudinal axis of each virtual boom section is oriented parallel with the physical working width of the agricultural machine, for example parallel to the central longitudinal axis of the pick-up mechanism. Using two or more virtual boom sections opens for multiple possibilities. For example, for an embodiment having a first virtual boom section and a second virtual boom section, one of the first and second virtual boom sections can correspond to the pick-up device, that is the physical working width of the agricultural machine, and the other of the first virtual boom section and the second virtual boom section can be arranged to record a worked area beyond the physical working width of the agricultural machine. That arrangement solves the problem defined above for embodiments having a single large virtual boom section since now the trigger signal for lowering/lifting the pick-up device can be derived from only the boom section that corresponds to the pick-up mechanism. However, it can lead to a different problem, which is that the correct worked area is not recorded evenly on the left and right side of the virtual boom section that corresponds to the pick-up mechanism. Accordingly, it is preferable to have a symmetrical arrangement on the left and right side of the agricultural machine, for example, by using three virtual boom sections.

The longitudinal axes of at least some of the plurality of virtual boom sections can be arranged co-axially. In some embodiments the longitudinal axes of each of the plurality of virtual boom sections are arranged co-axially.

Each virtual boom section can be arranged end to end with at least one adjacent virtual boom section. In some embodiments there are no gaps between adjacent virtual boom sections in the direction that is perpendicular to the direction of motion of the agricultural machine when performing the field operation.

The plurality of virtual boom sections can include a first virtual boom section. The plurality of boom sections can include a second virtual boom section. The plurality of virtual boom sections can include a third virtual boom section. In some embodiments the virtual working width of the agricultural machine can be equal to the length of the first virtual boom section + the length of the second virtual boom section + the length of the third virtual boom section.

The first virtual boom section can have a length that is equal to the physical working width of the agricultural machine. In some embodiments the first virtual boom section has a length that is equal to the length of the pick-up mechanism.

The first virtual boom section can have a first virtual position that is aligned with the physical position of the pick-up mechanism in the direction of travel of the agricultural machine when performing the field operation. For example, the first boom section can be mapped to a virtual position and orientation that corresponds with the physical position and orientation of the pick-up mechanism. Alternatively, the first boom section can be mapped to a virtual position that is located directly behind or in front of the pick-up mechanism, with respect to the direction of travel of the agricultural machine when performing the field operation. A longitudinal axis of the first boom section is arranged parallel with the central longitudinal axis of the pick-up mechanism. A centre point of the first virtual boom section can be aligned with a centre point of the pick-up mechanism, when viewed from the direction of travel of the agricultural machine when performing the field operation.

The second virtual boom section can be located on a first lateral (e.g. left) side of the first virtual boom section, thereby extending beyond the physical working width of the agricultural machine on the first lateral side; and the third virtual boom section is located on a second lateral (e.g. right) side of the first virtual boom section, thereby extending beyond the physical working width of the agricultural machine on the second lateral side. The second virtual boom section can be a virtual work area filler section located on the first lateral side of the agricultural machine, and the third virtual boom section can be a virtual work area filler section located on the second lateral side of the agricultural machine. The first virtual boom section can be located between the second virtual boom section and the third virtual boom section.

A first end of the second virtual boom section can abut a first end of the first virtual boom section, and a first end of the third virtual boom section can abut a second end of the first virtual boom section. In some embodiments the length of the second virtual boom section is equal to the length of the third boom section. In some embodiments the length L-2 of the second virtual boom section equals (Z-L-1)/2, wherein Z is the distance between the longitudinal centre lines of two adjacent swaths, L-1 is the length of the first virtual boom section. Likewise, the length L-3 of the third virtual boom section S equals (Z-L-1)/2. In some embodiments Z = L-1 + L-2 + L-3. In some embodiments, the virtual boom sections are created as an overlay by the recording system, which can use a Task Controller Section Control (TC-SC) of the control system, and referenced by an internal positioning system, such as Global Positioning System (GPS), coordinate system. The virtual boom sections can be positioned with reference to a fixed point, such as the GPS antenna on the tractor or the agricultural machine. Thus, the virtual boom sections can be located anywhere with reference to the fixed point.

The virtual boom sections can be located behind the agricultural machine (baler), in the direction of travel of the agricultural machine. The virtual boom sections can be located directly above the pick-up mechanism of the baler. The latter arrangement can be more practical in some circumstances since the pick-up mechanism defines the physical working width of the agricultural machine. When the agricultural machine performs the field operation, the pick-up mechanism is in a lowered position. The recording system starts recording of the worked area as the agricultural machine traverses the field. The worked area thereby follows the path that the agricultural machine follows. The worked area is based on the virtual working width of the agricultural machine. For example, the worked area can be recorded for each of the first virtual boom section, the second virtual boom section and the third virtual boom section as the agricultural machine traverses the field. Since the second virtual boom section and the third virtual boom section protrude beyond the physical working width of the agricultural machine, the worked area recorded by the recording system is greater than the worked area that would have been recorded based on the physical working width of the agricultural machine alone, since the physical working width is equal to the length of the first virtual boom section alone. Recording worked area based on the second virtual boom section and the third virtual boom section, in addition to the first virtual boom section, produces a better recording of the actual worked area of the field when one considers the areas of the field where crops have been harvested. Conceptually, the second virtual boom section and the third virtual boom section record areas of the field that have been worked by a harvesting machine to remove (e.g. mow/dig) crops from the field, or by a rake which rakes the crops together into the swath, and the recording system records areas worked by the harvesting machine and/or rake as worked areas of the agricultural machine, without requiring any data from the harvester and/or rake relating to their worked areas. It may not always be the case that the distance between the swaths on the field is constant. In the preceding agricultural operation of raking or windrowing the crop into swaths, it is possible that differences in the distances between the swaths occur. For example, a last pass of the rake or windrower on a field may contain less crop, less or a narrower area to be worked, than what is corresponding to a full working width of the rake/windrower. In that case, it may be possible for the rake/windrower to include a previous laid swath together with non-raked crop into a new swath. The previous laid swath may be shifted in that case and thus the original distance between the swaths has changed. A shift in position of a previous laid swath may result in a gap occurring between the recorded worked area, which gap may unintentionally not be recorded as worked area. Furthermore, for good filling of a bale chamber of a baler to provide better shaped bales, an operator of the baler typically may not pull/drive the baler in one straight direction, but rather may pull/drive the baler in a wavey pattern from left to right over the swath. This helps to ensure that the crop picked up from the field enters the bale chamber in a manner that alternates on the left and right side. Because of the difference in distance between the swaths and because of the waving drive pattern, the recorded worked area may not exactly match up (align) with previous recorded worked area. Again, a gap my arise between recorded worked areas, and those gaps may unintentionally not be recorded as worked area.

The recording system can include a gap control function, wherein the recording system is arranged to detect and eliminate gaps between two adjacent worked areas. The recording system can be arranged to detect gaps between a previously recorded worked area and a new area being recorded as a worked area. In some embodiments the recording system includes at least one gap detection virtual boom section. In some embodiments the recording system includes a gap detection virtual boom section on the first lateral side and another gap detection virtual boom section on the second lateral side. In some embodiments the recording system is arranged to designate the detected gaps as worked areas. The end result is to fully connect the previously recorded worked area and the new area recorded as a work area, thereby eliminating the detected gaps. In order for those gap areas due to shift of the swaths and/or weaving pattern driven with the baler to be recorded as worked area by the recording system, in some embodiments the virtual working width of the agricultural machine can include at least one gap filler virtual boom section. In some embodiments the recording system includes a gap filler virtual boom section on the first lateral side and another gap filler virtual boom section on the second lateral side.

The plurality of virtual boom sections can include a fourth virtual boom section.

The plurality of virtual boom sections can include a fifth virtual boom section.

The fourth virtual boom section can be located on the first lateral side of the second virtual boom section; and the fifth virtual boom section is located on the second lateral side of the third virtual boom section. In some embodiments the fourth virtual boom section is a gap filler section and can be used, in some circumstances, to further extend the virtual working width of the agricultural machine on the first lateral side of the agricultural machine. For example, the recording system can be arranged to automatically activate the gap filler section to record worked area in a condition wherein the recording system detects a gap. In some embodiments the fifth virtual boom section is a gap filler section and can be used, in some circumstances, to further extend the virtual working width of the agricultural machine on the second lateral side of the agricultural machine. For example, the recording system can be arranged to automatically activate the gap filler section to record worked area in a condition wherein the recording system detects a gap.

A first end of the fourth virtual section can abut a second end of the second virtual boom section; and a first end of the fifth virtual boom section can abut a second end of the third virtual boom section. In some embodiments the virtual working width of the agricultural machine can be equal to the length of the first virtual boom section + the length of the second virtual boom section + the length of the third virtual boom section + the length of the fourth virtual boom section + the length of the fifth virtual boom section. In some embodiments the length of the fourth virtual boom section is approximately equal to the physical working width of the agricultural machine. In some embodiments the length of the fourth virtual boom section is approximately L x the length of the pick-up mechanism, wherein L is in the range 0.5 to 1.5. In some embodiments the length of the fourth virtual boom section is approximately L x the length of the pick-up mechanism, wherein L is in the range 0.75 to 1.25. In some embodiments the length of the fourth virtual boom section depends on the distance between the swaths on the field. For example, the length of the fourth virtual boom section can be M x the distance between the swaths on the field, wherein M is in the range 0.1 to 0.6. In some embodiments the length of the fifth virtual boom section is approximately equal to the physical working width of the agricultural machine. In some embodiments the length of the fifth virtual boom section is approximately L x the length of the pick-up mechanism, wherein L is in the range 0.5 to 1.5. In some embodiments the length of the fifth virtual boom section is approximately L x the length of the pick-up mechanism, wherein L is in the range 0.75 to 1.25. In some embodiments the length of the fifth virtual boom section depends on the distance between the swaths on the field. For example, the length of the fifth virtual boom section can be M x the distance between the swaths on the field, wherein M is in the range 0.1 to 0.6.

The plurality of virtual boom sections can include a sixth virtual boom section.

The plurality of virtual boom sections can include a seventh virtual boom section.

The sixth virtual boom section can be located on the first lateral side of the fourth virtual boom section; and the seventh virtual boom section is located on the second lateral side of the fifth virtual boom section. In some embodiments the sixth virtual boom section is a gap detector section. In some embodiments the seventh virtual boom section is a gap detector section.

A first end of the sixth virtual section can abut a second end of the fourth virtual boom section; and a first end of the seventh virtual boom section can abut a second end of the fifth virtual boom section.

In some embodiments the virtual working width of the agricultural machine can be equal to the length of the first virtual boom section + the length of the second virtual boom section + the length of the third virtual boom section + the length of the fourth virtual boom section + the length of the sixth virtual boom section.

In some embodiments the virtual working width of the agricultural machine can be equal to the length of the first virtual boom section + the length of the second virtual boom section + the length of the third virtual boom section + the length of the fifth virtual boom section + the length of the seventh virtual boom section.

In some embodiments the virtual working width of the agricultural machine can be equal to the length of the first virtual boom section + the length of the second virtual boom section + the length of the third virtual boom section + the length of the fourth virtual boom section + the length of the fifth virtual boom section + the length of the sixth virtual boom section + the length of the seventh virtual boom section.

The length of each of the outermost virtual boom sections, i.e. the sixth virtual boom section and the seventh virtual boom section, is preferably quite narrow for accurate detection of the gaps between the recorded worked areas. In some embodiments the length of the sixth virtual boom section is greater than or equal to 5mm, is greater than or equal to 8mm, or is greater than or equal to 10mm. In some embodiments the length of the sixth virtual boom section is less than or equal to 20mm, less than or equal to 15mm, less than or equal to 12mm. In some embodiments the length of the seventh virtual boom section is greater than or equal to 5mm, is greater than or equal to 8mm, or is greater than or equal to 10mm. In some embodiments the length of the seventh virtual boom section is less than or equal to 20mm, less than or equal to 15mm, less than or equal to 12mm. In some embodiments the fourth virtual boom section is located between the second virtual boom section and the sixth virtual boom section. In some embodiments the fifth virtual boom section is located between the third virtual boom section and the seventh virtual boom section. Typically, the order of the virtual boom sections located on the first lateral side of the agricultural machine from the innermost to the outermost, is the first virtual boom section, second virtual boom section, fourth virtual boom section and the sixth virtual boom section. Typically, the order of the virtual boom sections located on the second lateral side of the agricultural machine from the innermost to the outermost, is the first virtual boom section, third virtual boom section, fifth virtual boom section and the seventh virtual boom section.

The recording system can be arranged to determine if the sixth virtual boom section is located in a previously worked area, and in response to determining that the sixth virtual boom section is located in a previously worked area using at least one of the sixth virtual boom section and the fourth virtual boom section, in addition to the first virtual boom section, the second virtual boom section and the third virtual boom section, to record a new worked area. This eliminates any gaps that may have otherwise occurred between the previously recorded worked area and the new worked area being recorded. The recording system can use data from a positioning system, such as a Global Positioning System (GPS), to determine if the sixth virtual boom section is located in the previously worked area. In some embodiments, when the agricultural machine is performing a field operation, in an operational condition wherein the recording system determines from the position data received from the positioning system that the sixth virtual boom section is fully located in an area of the field that the recording system has recorded as worked area, and the fourth virtual boom section is not fully located in the previously recorded worked area, the recording system is arranged to use the sixth virtual boom section and/or the fourth virtual boom section to record worked area. Thus, the recording system has detected a gap and, due to the length of the gap filling fourth virtual boom section not being fully with the previously worked area, the recording system determines that no swath or crop is likely to be present in that area. Accordingly, the gap is also recorded as worked area.

The recording system can be arranged to determine if the seventh virtual boom section is located in a previously worked area, and in response to determining that the seventh virtual boom section is located in a previously worked area using at least one of the seventh virtual boom section and the fifth virtual boom section, in addition to the first virtual boom section, the second virtual boom section and the third virtual boom section, to record a new worked area. This eliminates any gaps that may have otherwise occurred between the previously recorded worked area and the new worked area being recorded. The recording system can use data from the positioning system to determine if the seventh virtual boom section is located in the previously worked area. In some embodiments, when the agricultural machine is performing a field operation, in an operational condition wherein the recording system determines from the position data received from the positioning system that the seventh virtual boom section is fully located in an area of the field that the recording system has recorded as worked area, and the fifth virtual boom section is not fully located in the previously recorded worked area, the recording system is arranged to use the seventh virtual boom section and/or the fifth virtual boom section to record worked area. Thus, the recording system has detected a gap and, due to the length of the gap filling fifth virtual boom section not being fully with the previously worked area, the recording system determines that no swath or crop is likely to be present in that area. Accordingly, the gap is also recorded as worked area.

In some embodiments, in an operational condition wherein neither the first lateral (left side) gap detector section nor the second lateral (right) side gap detector section is fully located in a respective previously worked area, then the recording system determines that no gaps are detected. In that condition, the recording system does not use the left and right gap detector sections nor the left and right gap filling sections to record worked area.

The longitudinal axis of at least one of the virtual boom section can be offset from the longitudinal axis of at least one other virtual boom section in the direction of travel of the agricultural machine. Thus at least one virtual boom section can be positioned further forward than another virtual boom section in the direction of travel of the agricultural machine.

A first virtual boom can comprise the first virtual boom section and a second virtual boom can comprise the second virtual boom section and the third virtual boom section.

For example, in some embodiments the first boom section is located further forwards in the direction of travel of the agricultural machine than the second boom section and the third boom section. Conceptually, the first boom section can be considered to be part of a first virtual boom. The longitudinal axes of the second boom section and the third boom section can be co-axial. Conceptually, the second virtual boom section and third virtual boom section can be considered to be part of a second virtual boom. The longitudinal axis of the first boom section can be arranged parallel with the longitudinal axes of the second boom section and the third boom section. The second virtual boom section can be spaced apart from the third virtual boom section in a direction that is perpendicular to the direction of travel of the agricultural machine. The second virtual boom section can be located on a first lateral side of the first virtual boom section. The third virtual boom section can be located on a second lateral side of the first virtual boom section. When viewed from the direction of travel of the agricultural machine, the first virtual boom section can fill the space between the second virtual boom section and the third virtual boom section, albeit that the first virtual boom section is located further forward than the second virtual boom section and the third virtual boom section.

In some embodiments the longitudinal axes of the fourth virtual boom section, the fifth virtual boom section, the sixth virtual boom section and the seventh virtual boom section are arranged co-axially.

In some embodiments the fourth virtual boom section, the fifth virtual boom section, the sixth virtual boom section and the seventh virtual boom section are arranged co-axially with the first virtual boom section. Thus conceptually, the fourth, fifth, sixth and seventh virtual boom sections can be considered to be part of the first virtual boom.

In some embodiments the fourth virtual boom section and the sixth virtual boom section are located on the first lateral side of the first virtual boom section and are spaced apart from the first virtual boom section in a direction that is perpendicular to the direction of travel of the agricultural machine.

In some embodiments the fifth virtual boom section and the seventh virtual boom section are located on the second lateral side of the first virtual boom section and are spaced apart from the first virtual boom section in a direction that is perpendicular to the direction of travel of the agricultural machine. The second virtual boom section is located such that, when viewed from the direction of travel of the agricultural machine, the second virtual boom section fills the space between the first virtual boom section and the fourth virtual boom section, albeit that the second virtual boom section is offset backwards the first virtual boom section and the fourth virtual boom section. The third virtual boom section is located such that, when viewed from the direction of travel of the agricultural machine, the third virtual boom section fills the space between the first virtual boom section and the fifth virtual boom section, albeit that the third virtual boom section is offset backwards the first virtual boom section and the fifth virtual boom section.

In some embodiments the fourth virtual boom section, the fifth virtual boom section, the sixth virtual boom section and the seventh virtual boom section are arranged co-axially. Conceptually, the fourth virtual boom section, the fifth virtual boom section, the sixth virtual boom section and the seventh virtual boom section can be considered to be part of a third virtual boom.

In some embodiments the fourth virtual boom section, the fifth virtual boom section, the sixth virtual boom section and the seventh virtual boom section are offset from the first virtual boom section, the second virtual boom section and the third virtual boom section in the direction of travel of the agricultural machine. For example, the fourth virtual boom section, the fifth virtual boom section, the sixth virtual boom section and the seventh virtual boom section can be located further rearwards than the second virtual boom section and the third virtual boom section.

In some embodiments the fourth virtual boom section and the sixth virtual boom section are located on the first lateral side of the first virtual boom section.

In some embodiments the fifth virtual boom section and the seventh virtual boom section are located on the second lateral side of the first virtual boom section.

In some embodiments the fourth virtual boom section and the sixth virtual boom section are spaced apart from the fifth virtual boom section and the seventh virtual boom section in a direction that is perpendicular to the direction of travel of the agricultural machine.

In some embodiments the first virtual boom section, the second virtual boom section and third virtual boom section, when viewed from the direction of travel of the agricultural machine, fill the space between the sixth virtual boom section and the seventh virtual boom section, albeit that the first virtual boom section, the second virtual boom section and third virtual boom section are offset from the sixth virtual boom section and the seventh virtual boom section in the direction of travel of the agricultural machine.

Thus in some embodiments the first virtual boom can comprise the first virtual boom section, the second virtual boom section, the third virtual boom section, the fourth virtual boom section, the fifth virtual boom section, the sixth virtual boom section, and the seventh virtual boom section.

In some embodiments the first virtual boom can comprise the first virtual boom section and a second boom can comprise the second virtual boom section and the third virtual boom sections.

In some embodiments the first virtual boom can comprise the first virtual boom section, a second virtual boom can comprise the second virtual boom section and the third virtual boom section, and a third virtual boom can comprise the fourth virtual boom section and the fifth virtual boom section.

In some embodiments the third virtual boom can comprise the sixth virtual boom section and the seventh virtual boom section.

In some embodiments the first virtual boom can comprise the first virtual boom section, the fourth virtual boom section, the fifth virtual boom section, the sixth virtual boom section, and the seventh virtual boom section, and a second boom can comprise the second virtual boom section and the third virtual boom section. It will be appreciated by the skilled person that other arrangements of the virtual boom sections are possible.

An advantage of having a plurality of virtual booms is that it is possible to have different settings for each virtual boom, for example a turn on time can be set for each virtual boom. The turn on time can define the time at which, prior to the agricultural machine reaching a worked area, an action, such as pick-up mechanism disengagement, should be performed to complete that action at the time when the pick-up mechanism arrives at a border between worked area and non-worked area. Performing an action like pick-up mechanism disengagement takes time to happen (delay) after initiation, and the turn on time adapts to that delay. A turn on time may be defined in time (for example seconds) and may also be defined in distance (for example metres). Another advantage of using multiple booms is that the operator may define an offset trigger for the worked area registration: one virtual boom can be used for triggering recording and another virtual boom (virtually placed in offset, on another position relative to a first virtual boom) can be used to trigger start of functions and operational procedures of the baler. For example, the configuration described herein after can address a problem wherein swaths are positioned close to one another, for example when a swath running horizontally along a field intersects with a swath running vertically along a field it is possible that when picking up crops from the horizontal swath that a part of the vertical swath will be recorded as worked area based on the virtual working width of the agricultural vehicle when in fact that area of the vertical swath has not been treated by the baler. In this situation, when the baler picks up material from the vertical swath, and approaches the area of the vertical swath that is recorded as a worked area, the control system will automatically raise the pick-up mechanism thereby leaving some crop on the field.

A configuration having a first virtual boom comprising the first virtual boom section, which is overlayed onto the physical pick-up mechanism, and a second virtual boom comprising the second virtual boom section and the third virtual boom section, wherein the second virtual boom is offset rearwards from the first virtual boom in the direction of travel of the agricultural machine can mitigate the trigger problem, since the second virtual boom approaching the border between recorded worked area and non-recorded area can be used to trigger the control system to lift the pick-up mechanism. Since the second virtual boom is located rearwards of the physical pick-up mechanism, the physical pick-up mechanism is able to pick up the crop from that part of the vertical swath that has previously been recorded as worked area prior to the control system automatically raising the pick-up mechanism. In the arrangement, the distance in the direction of travel of the agricultural machine between the first virtual boom and the second virtual boom is preferably equal to the length of at least one of the second virtual boom section and the third virtual boom section.

Typically, the length of the second virtual boom section is equal to the length of the third virtual boom section. Thus, the pick-up mechanism is lifted by the control system when the recording system determines that the second virtual boom recognizes the previously worked area of the vertical swath, meaning the pick-up mechanism lift is delayed by a distance equal to the distance between the first and second virtual booms.

A first virtual boom can comprise one first virtual boom section and a second virtual boom can comprise another first virtual boom section. Thus in some embodiments, the virtual booms can include two first virtual boom sections. The two first virtual boom sections can be arranged parallel to one another, with one of the first virtual boom sections offset from the other in the direction of travel of the agricultural vehicle, such that one first virtual boom section is located further forwards than the other first virtual boom section. When viewed from the direction of travel of the agricultural machine, both first virtual boom sections are aligned. Having two first virtual boom sections can be applied to any of the configurations of virtual boom sections described above, such that the second first virtual boom section is positioned in front of the first first virtual boom section. For example, a first virtual boom can comprise one of the first virtual boom sections. A second virtual boom can comprise another one of the first virtual boom sections, the second virtual boom section, the third virtual boom section, the fourth virtual boom section, the fifth virtual boom section, the sixth virtual boom section, and the seventh virtual boom section.

In some embodiments the recording system can be a module of at least one of: an agricultural machine control system, a tractor control system, and an agricultural machine independent controller. The agricultural machine control system can include at least one processor and memory.

The agricultural machine control system can comprise ISOBUS Task Controller Section Control (TS-SC) functionality, and the recording system uses the ISOBUS Task Controller Section Control (TS-SC) functionality to define the virtual working width of the agricultural machine and to record the worked area based on the virtual working width of the agricultural machine.

The agricultural machine can include a positioning system, such as a Global Positioning System (GPS). At least one of the recording system and the agricultural machine control system can be arranged to receive data from a positioning system, which determines the position of the agricultural machine in the field.

The recording system can be arranged to relate the recorded worked area to positioning system coordinates.

The recording system can be arranged to automatically determine the distance between adjacent swaths from the worked area positioning system coordinates, and the recording system is arranged to adjust the current virtual working width of the agricultural machine to match the determined distance between adjacent swaths. In some embodiments the recording system is arranged to compare the current virtual working width of the agricultural machine, based on the lengths of the first virtual boom section, the second virtual boom section, and the third virtual boom section, with the determined distance between the adjacent swaths, and in a condition wherein the current virtual working width of the agricultural machine does not match the determined distance between the adjacent swaths, for example within a predetermined tolerance, the control system is arranged to adjust the current virtual working width of the agricultural machine to match the determined distance between adjacent swaths. To achieve this, the recording system can be arranged to automatically adjust the length of at least one virtual boom section. For example, the recording system can be arranged to automatically adjust the length of at least one of the second virtual boom section and the third virtual boom section. The automatic determination can be performed periodically at a suitable period to prevent constant readjustment of the virtual working width the agricultural machine.

The recording system can use TC-SC functionality to automatically determine the distance between adjacent swaths and, in response to determining the distance between adjacent swaths, to automatically adjust the virtual working width of the agricultural machine. By driving over the field, the controller records worked area. The recording of the worked area is related to the GPS coordinates of the worked area, so the TS-SC controller is able to determine the distance between the swaths from the paths that have been driven. The TS-SC controller can determine if it is necessary to change the default value of the distance between the swaths. In some embodiments, if the TS-SC controller detects a lot of gaps being present between the worked areas, the TS-SC controller can adjust, for example increase, the length of the left and right filler sections (the second virtual boom section and the third virtual boom section). In some embodiments, if the TS-SC controller detects a lot of overlaps or adjacent work areas, the controller can adjust, for example decrease, the length of the left and right filler sections (the second virtual boom section and the third virtual boom section). Thus, in some embodiments, the recording system is able to automatically adjust the length of the second virtual boom section, during a field operation, in response to the recording system determining that the size and/or number of gaps produced between adjacent work areas is greater than or equal to a threshold value. In some embodiments, the recording system is able to automatically adjust the length of the third virtual boom section, during a field operation, in response to the recording system determining that the size and/or number of gaps produced between adjacent work areas is greater than or equal to a threshold value. In some embodiments, the recording system is able to automatically adjust the length of the second virtual boom section, during a field operation, in response to the recording system determining that the size and/or number of overlaps produced by adjacent work areas is greater than or equal to a threshold value. In some embodiments, the recording system is able to automatically adjust the length of the third virtual boom section, during a field operation, in response to the recording system determining that the size and/or number of overlaps produced by adjacent work areas is greater than or equal to a threshold value.

The agricultural machine control system can be arranged to automatically control at least one function of the agricultural machine in response to the agricultural machine recording system determining from the data received from the positioning system that the agricultural machine is approaching a border between an area previously recorded as worked area and an area that has not been recorded as worked area.

The agricultural machine control system can be arranged to automatically move the pick-up mechanism from a working position in which the pick-up is positioned close to the ground for collecting the crops from the swath, to a non-working position in which the pick-up is positioned above the ground to avoid collecting crops from the swath, in a condition wherein the control system determines from the data received from the positioning system that the agricultural machine is approaching/entering an area of the field that has been recorded as worked area by the recording system. In some embodiments, for triggering whether the pick-up mechanism needs to be moved, the control system can be arranged to check only whether the first virtual boom section is approaching/entering an area of the field that has been recorded as worked area by the recording system. That is, in those embodiments, the control system does not check if either of the second virtual boom section or third virtual boom section is approaching/entering an area of the field that has been recorded as worked area by the recording system.

The agricultural machine control system can be arranged to automatically move the pick-up mechanism from a non-working position in which the pick-up is positioned above the ground, to a working position in which the pick-up mechanism is positioned close to the ground to collect crops from the swath, in a condition wherein the control system determines from the data received from the positioning system that the agricultural machine is approaching/entering an area of the field that is a non-worked area.

The agricultural machine control system can be arranged to automatically commence a rotor knife device cleaning operation in a condition wherein the control system determines from the data received from the positioning system that the agricultural machine is approaching/entering an area of the field that has been recorded as worked area by the recording system.

The recording system can include means for inhibiting, at least temporarily, the agricultural machine control system from automatically controlling at least one function of the agricultural machine in response to the agricultural machine recording system determining from the data received from the positioning system that the agricultural machine is approaching a border between an area previously recorded as worked area and an area that has not previously been recorded as worked area.

The means for inhibiting, at least temporarily, the agricultural machine control system from automatically controlling at least one function of the agricultural machine can comprise a control, such as a switch, button, or icon on a touch screen, which is arranged to enable an operator to switch off /on the second virtual boom section from recording areas of the field as worked area.

The means for inhibiting, at least temporarily, the agricultural machine control system from automatically controlling at least one function of the agricultural machine can comprise a control, such as a switch, button, or icon on a touch screen, which is arranged to enable an operator to switch off /on the third virtual boom section from recording areas of the field as worked area.

The means for inhibiting, at least temporarily, the agricultural machine control system from automatically controlling at least one function of the agricultural machine can comprise a delay setting, which is arranged to delay the control system from automatically controlling at least one function of the agricultural machine, such as raising/lowering of the pick-up mechanism, after a trigger signal has been received. The delay setting can delay the action occurring, for example, for a predetermined period of time, or for a predetermined distance travelled by the agricultural machine. The delay setting can be a fixed delay, which can be preprogrammed into the system. Alternatively, the delay setting can be set by an operator, for example via a HMI, which is described further below.

The means for inhibiting, at least temporarily, the agricultural machine control system from automatically controlling at least one function of the agricultural machine can comprise a control, such as a switch, button, or icon on a touch screen, which is arranged to override the control system, thereby preventing the control system from automatically performing an operation such as raising/lowering the pick-up mechanism in response to a received trigger signal. For example, if the control system tries to automatically raise the pick-up mechanism because the recording system has determined that the agricultural machine has reached a border of previously recorded worked area, when in fact there is still crop located in the swath in the area previously recorded as worked area, the operator is able to override the control system by operating the control to manually lower the pick-up mechanism.

In some embodiments, the recording system can be arranged to detect the geographical positions on the field where an operator has overridden the control device, from data received from the positioning system, and where there is a repeated overriding at a particular location on the field, the recording system can learn not to issue a trigger signal to the control system to lift the pick-up mechanism at that location.

The agricultural machine can include a human to machine interface (HMI), which is arranged to enable an operator to define a virtual working width for the agricultural machine. The HMI can include a control/display screen, which enables the operator to select processes, input data. In some embodiments, the TC-SC control screen can be accessed from an agricultural machine, such as a baler, Human to Machine Interface (HMI), which typically comprises a touch work screen. The HMI can be located on the agricultural machine, a vehicle such as a tractor which is arranged to pull the agricultural machine or can be included in an agricultural machine independent controller. The virtual working width for the agricultural machine, which can be equal to the distance between adjacent swaths, can be entered into the TS-SC controller by the operator. Alternatively, the TS-SC controller can start with a default value. The default value can be a default value from controller factory settings, a previous value entered by the operator or a TS-SC controller determined value from a previous field operation of the agricultural machine. The default value may be changed during the field operation, either by the operator or by the TS-SC controller. If, for example, the operator notices the distance between the swaths has changed during the field operation, the operator can change the actual or default value of the distance.

The HMI can be arranged to enable an operator to activate and deactivate the gap control function.

The HMI can be arranged to enable an operator to select the number of virtual boom sections to be used to define the virtual working width of the agricultural machine.

The HMI can be arranged to enable an operator to select the virtual booms to be used in a work area recording process and, optionally to enable an operator to choose which virtual boom sections of the selected virtual booms are to be used in a work area recording process.

The recording system can be arranged to generate a map of the worked area(s). The recording system can be arranged to use the data from the positioning system to determine the location of the worked areas on the field. The positioning data for the agricultural machine and data regarding the arrangement of the virtual boom, or the virtual boom sections, can be used to create the map the worked area(s).

The recording system can be arranged to overlay the map of the worked area(s) on to an existing map of the field. The recording system can be arranged to display the map of the worked area(s) and/or the existing map of the field on the HMI display screen.

The recording system can be arranged to commence recording worked area in response to at least one operational condition of the agricultural machine being met. For example, in some embodiments the recording system will only commence recording worked area in response to the recording system determining that the pick-up mechanism is located in its operative position close to the ground. The recording system can be arranged to not commence recording worked area in response to at least one operational condition of the agricultural machine being met. For example, in some embodiments the recording system will not commence recording worked area in the event that the recording system determines that the pick-up mechanism is located in its non-operative position above the ground. Other suitable operational conditions of the agricultural machine can be used to trigger / prevent the recording system from commencing recording worked area. At all times and in all scenarios, the operator is allowed and is able to override the pick-up position from the automatic pick-up lift according to recognizing worked and non-worked area by the TC-SC. This is done by the operator pressing functions buttons/icons for pick-up mechanism lift and pick-up mechanism lower.

The agricultural machine can comprise at least one of a baler, a baler-wrapper combination, a loading wagon, and a forage harvester. In some embodiments the baler includes the pick-up mechanism. In some embodiments the baler is included in a baler-wrapper combination and the baler includes the pick-up mechanism. In some embodiments the loading wagon includes the pick-up mechanism. In some embodiments the forage harvester includes the pick-up mechanism.

According to another aspect there in a method according to claim 42
According to another aspect there is a method for performing an agricultural field operation by an agricultural machine.

The method can comprise providing an agricultural machine having a pick-up mechanism, the pick-up defining a physical working width of the agricultural machine.

The method can comprise picking up harvested crops from a swath using the pick-up mechanism.

The method can comprise recording a worked area for the agricultural machine during the field operation by a recording system. The recording system can be arranged to determine the worked area from a virtual working width for the agricultural machine, which is greater than the physical working width of the agricultural machine, such that at least part of the worked area recorded by the recording system is located beyond the physical working width of the agricultural machine.

The virtual working width of the agricultural machine can comprise a first virtual boom section and a second virtual boom section, and recording the worked area from the first virtual boom section and the second virtual boom section.

The virtual working width of the agricultural machine can comprise a third virtual boom section, and recording the worked area from the third virtual boom section.

The virtual working width of the agricultural machine can comprise a fourth virtual boom section, and recording the worked area from the fourth virtual boom section.

The virtual working width of the agricultural machine can comprise a fifth virtual boom section, and recording the worked area from the fifth virtual boom section.

The virtual working width of the agricultural machine can comprise a sixth virtual boom section, and recording the worked area from the sixth virtual boom section.

The virtual working width of the agricultural machine can comprise a seventh virtual boom section, and recording the worked area from the seventh virtual boom section.

The method can comprise the recording system determining if the sixth virtual boom section is located in a previously worked area, and in response to determining that the sixth virtual boom section is located in a previously worked area using at least one of the sixth virtual boom section and the fourth virtual boom section, in addition to the first virtual boom section, the second virtual boom section and the third virtual boom section, to record a new worked area. This eliminates any gaps that may have otherwise occurred between the previously recorded worked area and the new worked area being recorded. The recording system can use data from a positioning system, such as a Global Positioning System (GPS), to determine if the sixth virtual boom section is located in the previously worked area.

The method can comprise the recording system determining if the seventh virtual boom section is located in a previously worked area, and in response to determining that the seventh virtual boom section is located in a previously worked area using at least one of the seventh virtual boom section and the fifth virtual boom section, in addition to the first virtual boom section, the second virtual boom section and the third virtual boom section, to record a new worked area. This eliminates any gaps that may have otherwise occurred between the previously recorded worked area and the new worked area being recorded. The recording system can use data from the positioning system to determine if the seventh virtual boom section is located in the previously worked area.

The agricultural machine used in the method can be arranged according to any configuration described herein.

### BRIEF DESCRIPTION OF DRAWINGS

Embodiments of the invention will now be described by way of example with reference to the accompanying drawings, in which:
Figure 1 is a plan view of a cut-out of a field corner comprising a prior art tractor with rake/windrower raking crop together into swaths, and comprising a prior art tractor with a baler baling the crops from the swaths into bales, leaving a worked area (hatched) corresponding to the working width of the baler multiplied by the traveled distance/route of the baler;
Figure 2 is a plan view of a cut-out of a field corner comprising a prior art tractor with a sugar beet defoliator machine (front attachment) and a sugar beet digger (rear attachment) digging the sugar beet from the ground and collecting the sugar beet into swaths, and comprising a prior art tractor with a sugar beet collector, picking-up sugar beet from the swaths and conveying the sugar beet in to a tractor towed wagon, leaving a worked area (hatched) corresponding to the working width of the sugar beet collector multiplied by the traveled distance/route of the sugar beet collector;
Figure 3 is a plan view of a cut-out of a field corner comprising a prior art tractor with a baler baling the crops from the swaths into bales, leaving a worked area (hatched) corresponding to the working width of the baler multiplied by the traveled distance/route of the baler, and showing a worked area that is recorded where it already is obvious that no crop is present anymore as the crop has already been baled;

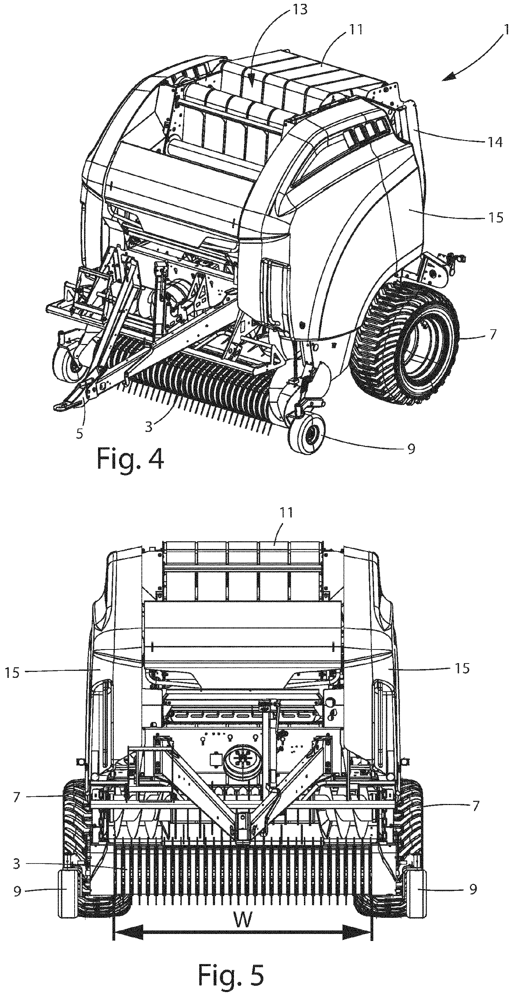

Figure 4 is an isometric view of a baler according to a first embodiment of the invention, the baler including a pick-up mechanism;
Figure 5 is a front view of the baler of Figure 4, showing the physical working width W of the baler, which spans the width of a baler pick-up mechanism, from the most outer left pick-up tooth to the most outer right pick-up tooth;

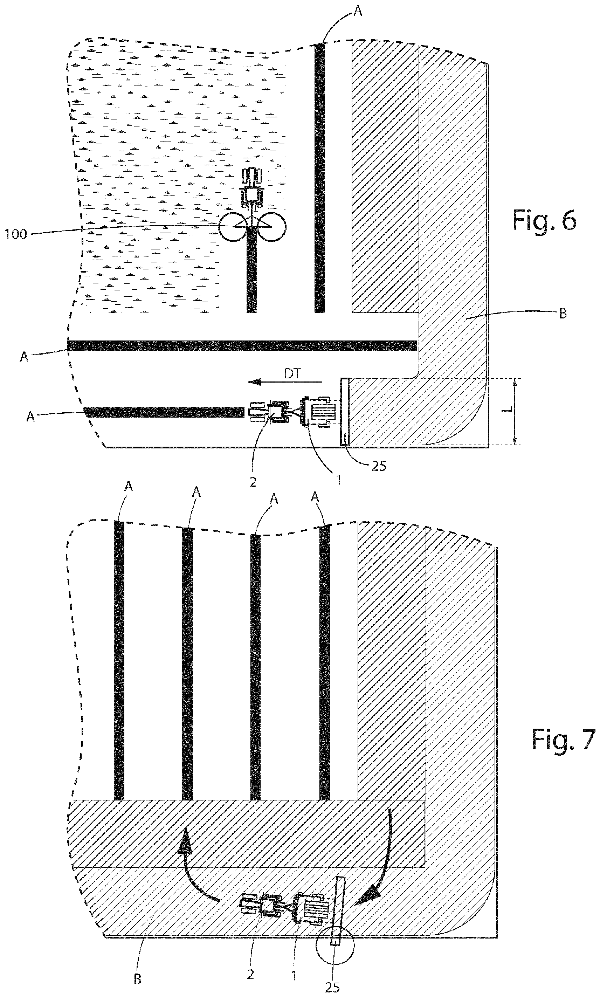

Figure 6 is a plan view of a cut-out of a field corner comprising a tractor with rake/windrower raking crop together into swaths, and comprising a tractor with the baler of Figure 4 baling the crops from the swaths into bales, leaving a worked area (hatched) corresponding to the distance between the swaths multiplied by the traveled distance/route of the baler. The worked area is recorded from one virtual boom section only;
Figure 7 is a plan view of a cut-out of a field corner comprising a tractor with the baler according to Figure 4 turning on the headland to a new swath, where the one virtual boom section of Figure 6 is projecting outside the contour of the field, the one virtual boom section recognizing and being partly in non-worked area (the area outside the contour of the field) and thus falsely assuming the baler is in non-worked area;

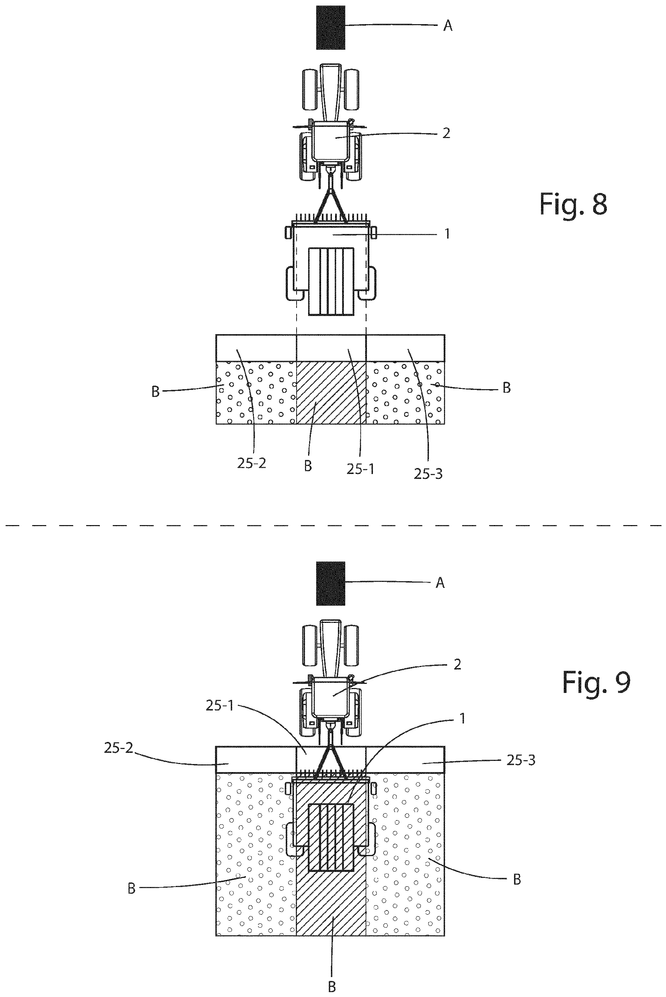

Figure 8 is a plan view of a tractor with the baler of Figure 4 having three virtual boom sections located behind the baler;
Figure 9 is a plan view of a tractor with the baler of Figure 4 having three virtual boom sections located above the pick-up mechanism of the baler;

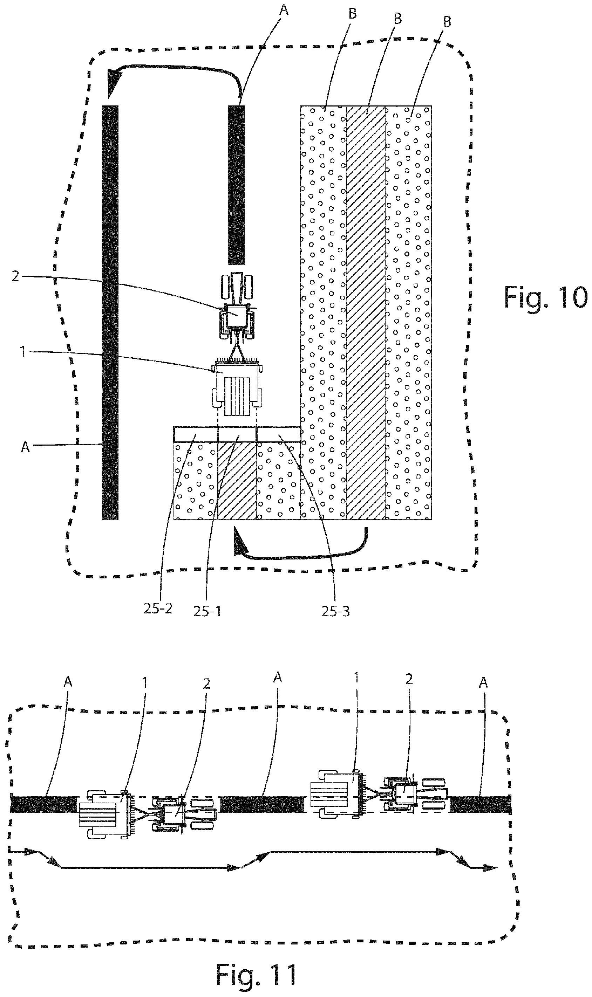

Figure 10 is a plan view of a cut-out of a field comprising a tractor with the baler of Figure 4 having three virtual boom sections located behind the baler, the baler being driven in straight lines along the swaths, while the virtual boom sections record the worked area;
Figure 11 is a plan view of a cut-out of a field comprising a tractor with the baler of Figure 4 illustrating a weaving drive pattern for correct filling of the baler during a bale making process;

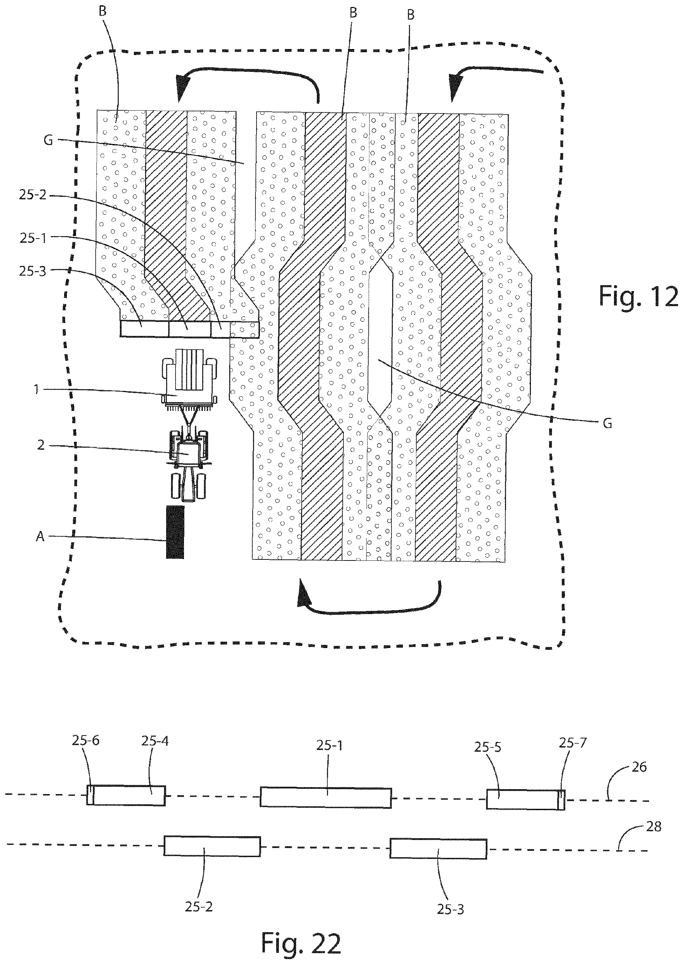

Figure 12 is a plan view of a cut-out of a field comprising a tractor with the baler of Figure 4 having three virtual boom sections located behind the baler, the baler being driven in the weaving pattern along the swaths, while the virtual boom sections record the worked area, resulting in unintentional gaps of non-worked area;

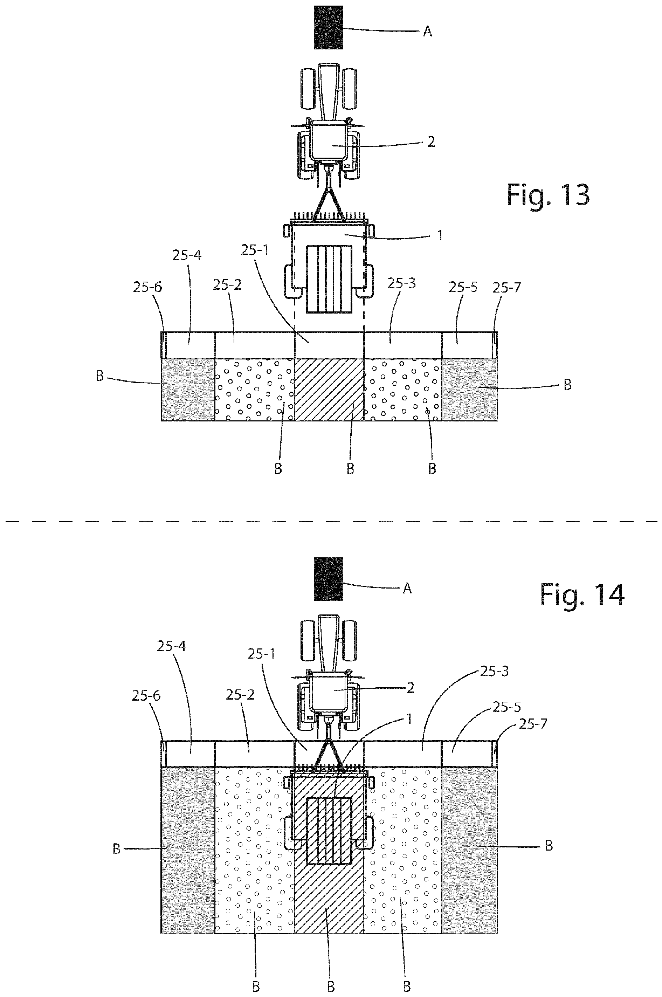

Figure 13 is a plan view of a tractor with the baler of Figure 4 having seven virtual boom recording sections located behind the baler;
Figure 14 is a plan view of a tractor with the baler of Figure 4 having seven virtual work boom sections located above the pick-up mechanism of the baler;

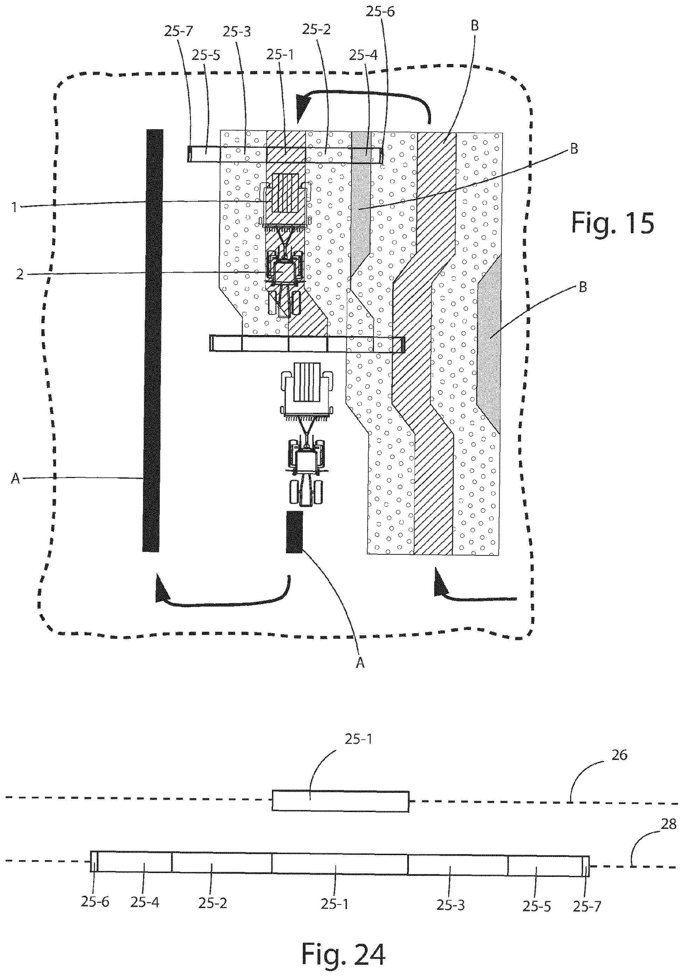

Figure 15 is a plan view of a cut-out of a field comprising a tractor with the baler of Figure 4 having seven virtual boom sections located behind the baler, the baler being driven in the weaving pattern along the swaths, while the virtual boom sections record the worked area, the arrangement is such that the unintentional gaps shown in Figure 12 are recorded as worked area;

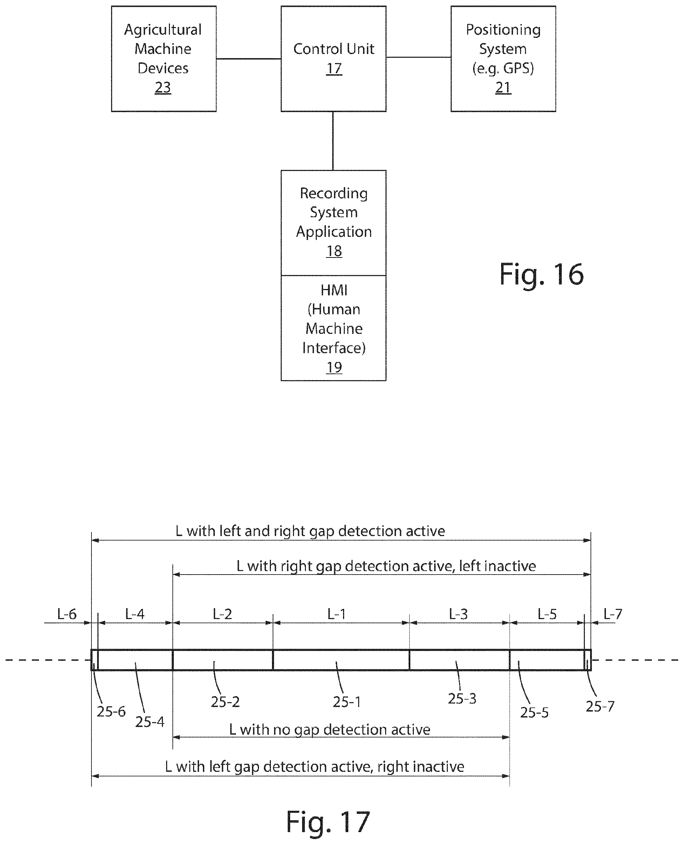

Figure 16 is a diagrammatic view of an agricultural machine control system, which is arranged to record working area of the baler of Figure 4 based on a virtual working width of the vehicle, which can be set, for example, by an operator via a Human to Machine Interface (HMI);
Figure 17 is a diagrammatic view of a virtual working width of the baler of Figure 4, which comprises seven virtual boom sections, which each can selectively record areas of the filed as worked areas;

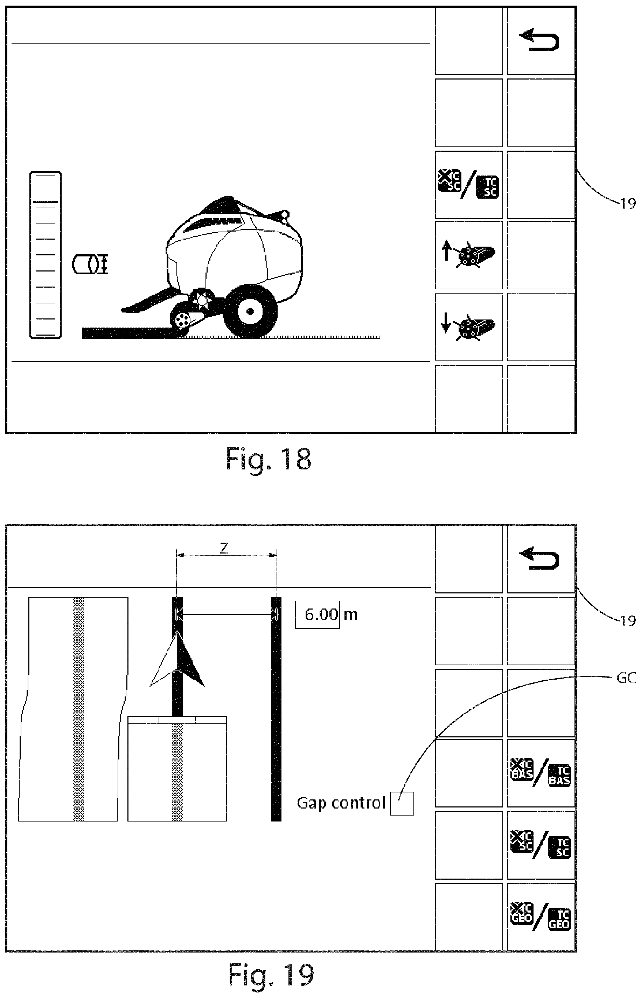

Figure 18 is an illustrative screenshot from the HMI of Figure 16, which comprises an on/off icon for TC-SC functionality, an icon to operate the pick-up mechanism lifting function and an icon to operate the pick-up mechanism lowering function;
Figure 19 is an illustrative screenshot from the HMI of Figure 16, which shows the chosen situation/configuration, and wherein an operator can enter the virtual working width of the baler, which can for example correspond to a distance between the swaths, and an icon for turning on/off the gap control function shown in the off condition, thereby selecting a virtual width having three virtual work area recording sections, which may lead to recording gaps appearing in some circumstances;

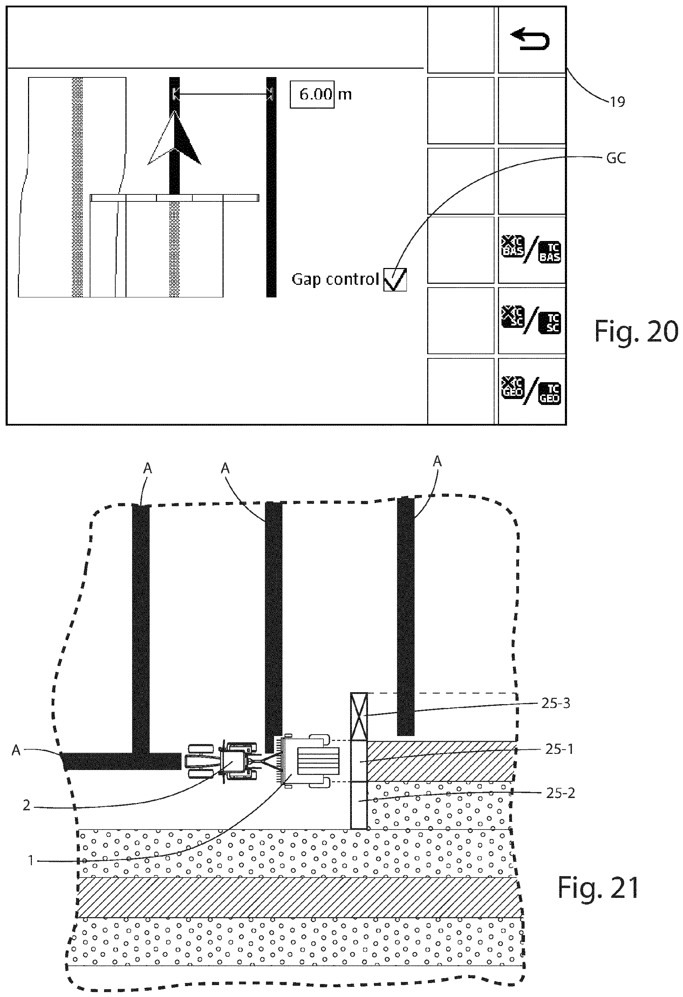

Figure 20 is an illustrative screenshot from the HMI of Figure 16, in which the chosen situation/configuration is displayed, including the operator having set the distance between the swaths, and having selected the gap control function by selecting the on/off the gap control function icon, and the diagram indicating that a fourth and sixth virtual boom sections are recording areas of the field as worked areas; and
Figure 21 is a plan view of a cut-out of a field corner comprising a tractor with the baler of Figure 4 baling the crops from the swaths into bales, illustrating a problem that can occur in some circumstances where on swath is laid very close to another swath, for example a horizontal swath adjacent a vertical swath, wherein the recording system recognizes worked area too early, which can result in an incorrect automatic movement of, for example the pick-up mechanism;
Figure 22 is a diagrammatic view of an alternative arrangement of virtual boom sections, wherein some virtual boom sections are arranged on a first virtual boom and other virtual boom sections are arranged on a second virtual boom, in this instance the first virtual boom comprises the first virtual boom section, the fourth virtual boom section, the fifth virtual boom section, the sixth virtual boom section and the seventh virtual boom section, and the second virtual boom comprises the second virtual boom section and the third virtual boom section;
Figure 23 is a diagrammatic view of an alternative arrangement of virtual boom sections, wherein one virtual boom section is arranged on a first virtual boom, and other virtual boom sections are arranged on a second virtual boom, and other virtual boom sections are arranged on a third virtual boom, in this instance the first virtual boom comprises the first virtual boom section, the second virtual boom comprises the second virtual boom section and the third virtual boom section and the third virtual boom comprises the fourth virtual boom section, the fifth virtual boom section, the sixth virtual boom section and the seventh virtual boom section; and
Figure 24 is a diagrammatic view of an alternative arrangement of virtual boom sections, which includes two first virtual boom sections, wherein a first virtual boom comprises one of the first virtual boom sections, and a second virtual boom includes the other first virtual boom section together with other virtual boom sections, wherein the other virtual boom sections comprise the second virtual boom section, the third virtual boom section, the fourth virtual boom section, the fifth virtual boom section, the sixth virtual boom section and the seventh virtual boom section.

### DETAILED DESCRIPTION OF DRAWINGS

A first embodiment of an agricultural machine 1, in this case a baler, which is arranged to be pulled by a tractor 2, according to the invention is shown in Figures 4 to 20. However, the agricultural machine could alternatively comprise a different agricultural machine, such as a loading wagon or a forage harvester.

The baler 1 shown in Figure 4 comprises a round baler with a variable baling chamber, but any other suitable baler can be used in the context of the invention, such as a round baler with a fixed baler chamber, a square baler, or a combined baler-wrapper machine.

The baler 1 includes a pick-up mechanism 3 for picking up bale material, for example cut straw or grass, from the ground, a drawbar 5 for attaching the baler to a tractor, support wheels 7, 9 and a plurality of press elements comprising elongate belts 11 that are guided around a set of rollers (not shown) and/or driven press rollers (not shown). The belts 11 together with a pair of end plates (not shown) create a cylindrical bale chamber 13 in which a round bale can be formed. The pick-up mechanism 3 is configured to feed the bale material into the bale chamber 13 through a crop mouth. The baler 1 includes a tailgate 14, which is arranged to open to enable a formed bale to exit the bale chamber 13. Lateral sides of the baler 2 are shrouded by covers 15. The baler may be driven, for example, via the power take off (PTO) of the tractor. The baler 1 typically includes a knife cutting section, which is arranged to cut crop picked up by the pick-up mechanism 3 prior to the crop entering the bale chamber 13. These components are conventional and will not be further described.

Optionally, the baler may include a binding apparatus (not shown) that is configured to apply a binding material, in this example a film, net or twine binding material, to a cylindrical surface of the bale formed in the bale chamber to bind the bale, and a cutter device that is configured to cut the binding material after the bale has been bound.

Optionally, the baler may comprise a combined baler-wrapper machine.

The agricultural machine 1 includes a control system 17, a recording system application 18, a human to machine interface (HMI) 19, for example in the form of a touchscreen, and a positioning system 21 such as a Global Positioning System (GPS). The control system 17, recording system application 18 and HMI can be part of a tractor 2 control unit, a baler 1 control unit, or an agricultural machine independent controller terminal, which can be plugged into the tractor 2 and/or baler 1.

The control system 17 is programmed in accordance with ISOBUS ISO11783, known as "Tractors and machinery for agriculture and forestry - Serial control and communications data network" (commonly referred to as "ISOBUS"). ISOBUS is a communication protocol for the agriculture industry based on, and harmonized with, the SAE J1939 protocol (which is based on the CAN bus). The control system 17 includes a Task controller (TC) and Section Control (SC). The SC may be used as a recording system module that is arranged to record geographic positions of the agricultural machine, in particular the baler 1 in this embodiment, and to perform subsequent on/off control of agricultural machine devices 23 when the agricultural machine encounters the previous or a specific position in the field to avoid overlapping of field operations. The positioning system 21 is connected to the TC, in this instance a GPS receiver is connected to the control system 17.

The inventors have programmed the recording system application 18 to interact with the TC-SC of the control system 17 to function in a new manner, which is to record the worked area B traversed by the agricultural machine 1 based on a virtual working width of the agricultural machine (baler) 1, which is different from the physical working width W (see Figure 5) of the baler 1. Typically, the physical working width W of the baler 1 is defined by the length W of the pick-up mechanism 3. It will be appreciated that the length W of the pick-up mechanism 3 is oriented transversely across the baler 1 and hence is perpendicular to the direction of travel of the baler 1. In the invention, the virtual working width of the agricultural machine is greater than the physical working width W of the baler, that is, the virtual working width of the agricultural machine is greater than the length W of the pick-up mechanism 3. The recording system application 18 enables the agricultural machine 1 to record as worked area B certain areas of the field that are located laterally beyond the physical working width W of the baler 1, which correspond to areas of the field adjacent the baler 1 that have been harvested by a harvester to remove crop from the ground, and subsequently raked into swaths A by a raking machine, when the baler 1 that performs the field operation to pick-up crops from the swaths A has not physically worked those areas with its pick-up mechanism 3.

In some embodiments the virtual working width of the agricultural machine can be preprogrammed into the control system 17. In some embodiments, the recording system application 18 and HMI 19 can be arranged to enable the operator of the agricultural machine 1 to define the virtual working width of the agricultural machine. This can be achieved for example, by the operator inputting the virtual working width into the recording system 17 via the HMI 19. In some embodiments the control system 17 can be preprogrammed with a default value for the virtual working width of the agricultural machine, and the operator is able to change the default value via the HMI 19. In some embodiments, the HMI 19 can present the operator with the ability to input the distance Z between two adjacent swaths A, for example measured from a longitudinal centre line of a first swath A to the longitudinal centre line of a second swath A, and the virtual working width of the agricultural machine can be determined by the recording system 1 from the distance between the swaths A (see Figure 19). For example, the recording system 17 can be arranged to set the virtual working width of the agricultural machine as being equal to the distance between the two adjacent swaths A.

The virtual working width of the agricultural machine can comprise at least one virtual boom section 25. The number of virtual boom sections 25 can be preprogrammed into the record system 18 or alternatively the operator can be arranged to select the number of virtual boom sections 25 to use for each field operation via the HMI 19. The HMI is arranged to display the or each virtual boom section 25 on a display screen of the HMI 19. Figures 19 and 20 illustrate a possible HMI screen display. Each virtual boom section 25 can comprise a rectangular icon. The virtual boom sections 25 can be created as an overlay by the recording system 18, which can use the Task Controller Section Control (TC-SC) of the control system 17, and referenced by an internal positioning system, such as Global Positioning System (GPS), coordinate system. The virtual boom sections 25 are positioned with reference to a fixed point, such as the GPS antenna on the tractor or the agricultural machine. Thus, the virtual boom sections 25 can be located anywhere with reference to the fixed point.

For example, Figure 6 shows an arrangement using a single virtual boom section 25, which has a length L which is equal to the virtual working width of the agricultural machine. The single virtual boom section 25 has a length L that is wider than the physical working width W of the agricultural machine and preferably the length L of the single virtual boom section 25 corresponds to the distance between the swaths A on the field. In Figure 6, the single virtual boom section 25 is located rearwards of the agricultural machine 1 in the direction of travel of the agricultural machine. However other positions are possible, for example, the single virtual boom section 25 can be located in a position that corresponds to the position of the pick-up mechanism 3, such that the single virtual boom section 25 is effectively an overlay of the pick-up mechanism 3, albeit with portions of the single virtual boom section 25 extending laterally outwards beyond the ends of the pick-up mechanism 3. A longitudinal axis of the virtual boom section extends transversely relative to the direction of travel DT of the agricultural machine, and thus the longitudinal axis of the virtual boom section is arranged parallel with the central longitudinal axis of the pick-up mechanism 3.

However, the inventors have determined that using only one virtual boom section 25 may lead to a problem when performing actions like automatic pick-up mechanism 3 lift and lowering. It is possible that the recording system returns a signal if the virtual boom section 25 is in a previously worked area B. The signal is different from when the virtual boom section 25 is in a non-worked area. The signals can be coupled to operational actions of the agricultural machine 1, such as automatic lifting and lowering of the pick-up mechanism, which are performed as stated above. Using only one virtual boom section 25, which is wider than the physical working width of the agricultural machine may trigger false signals (signals not meant to be sent) and thus trigger operational actions at moments where those actions are not meant to occur. Typically, when the virtual boom section is 100% in a previously worked area B, it is desirable to have the pick-up mechanism 3 lifted from the ground. When the virtual boom section is not 100% is the previously worked area B, the pick-up mechanism is lowered, as only two possible values can be returned by the recording system. Accordingly, when using one large virtual boom section 25 for recording a worked area B beyond the physical working width W of the agricultural machine, it is much more critical to automatically operate the pick-up mechanism 3, because every time the single large virtual boom section 25 enters part of the previously non-worked area, the pick-up mechanism will be lowered. This is illustrated in Figure 7.

The above-mentioned problem can be addressed by using a plurality of virtual boom sections 25 to define the virtual working width of the agricultural machine. There can be many different arrangements of the virtual boom sections 25, including the number of virtual boom sections 25 that are used for the field operation, where each virtual boom section 25 is positioned virtually relative to the fixed point on the agricultural machine, and the functions associated with the virtual boom sections 25. Any suitable number of virtual boom sections 25 can be used during a field operation, for example two, three, four, five, six, seven, eight, nine or ten virtual boom sections can be used. The number of virtual boom sections 25 used can be preprogrammed into recording system 18, or alternatively the operator can select the number of virtual boom sections 25 to use via the HMI 19. Likewise, the configuration of the virtual boom sections 25 used can be preprogrammed into recording system 18, or alternatively the operator can select the configuration of virtual boom sections 25 via the HMI 19.

A longitudinal axis of each virtual boom section 25 is oriented perpendicular to the direction of travel DT of the agricultural machine as the agricultural machine 1 performs the field operation. Typically, the longitudinal axis of each virtual boom section 25 is oriented parallel with the physical working width W of the agricultural machine, for example parallel to the central longitudinal axis of the pick-up mechanism 3.

When a plurality of virtual boom sections 25 are used during a field operation, typically the plurality of virtual boom sections 25 includes a first virtual boom section 25-1. The first virtual boom section 25 typically has a length L-1 that is equal to the length W of the pick-up mechanism 3, and hence is equal in length to the physical working width W of the agricultural machine 1. The first virtual boom section 25-1 is typically arranged parallel to pick-up mechanism 3 and, when viewed from the direction of travel DT of the agricultural machine, is typically aligned with the pick-up mechanism. The first virtual boom section 25-1 can be located such that it overlies the pick-up mechanism 3. Alternatively, first virtual boom section 25-1 can be located further forwards than the pick-up mechanism 3 in the direction of travel DT of the agricultural machine or first virtual boom section 25-1 can be located further rearwards of the pick-up mechanism 3 in the direction of travel DT of the agricultural machine 1.

The plurality of virtual boom sections 25 can include a second virtual boom section 25-2, which comprises a filler section. The filler section is arranged to record as worked area B strips of the field that are located outside of the physical working width W of the agricultural machine 1 on a first lateral (e.g. left) side of the agricultural machine 1. The second virtual boom section 25-2 can protrude laterally outwards beyond the physical width of the agricultural machine 1 on the first lateral side of the agricultural machine 1.

The plurality of virtual boom sections 25 can include a third virtual boom section 25-3, which comprises a filler section. The filler section is arranged to record as worked area B strips of the field that are located outside of the physical working width W of the agricultural machine 1 on a second lateral (e.g. right) side of the agricultural machine 1. The third virtual boom section 25-3 can protrude laterally outwards beyond the physical width of the agricultural machine 1 on the second lateral side of the agricultural machine 1.

In some embodiments, the length L-2 of the second virtual boom section 25-2 can be equal to the length L-3 of the third boom section 25-3. In some embodiments the length L-2 of the second virtual boom section equals (Z-L-1)/2, wherein Z is the distance between the longitudinal centre lines of two adjacent swaths A, L-1 is the length of the first virtual boom section. Likewise, the length L-3 of the third virtual boom section equals (Z-L-1)/2. Typically, Z = L-1 + L-2 + L-3.

The virtual width of the agricultural machine can be determined by the sum of the lengths of the virtual boom sections 25, for example, the virtual width of the agricultural machine L can be determined by the sum of the lengths of the first virtual boom section L-1, the second virtual boom section L-2 and the third virtual boom section L-3.

The recording system 18 includes a gap control function GC, wherein the recording system 18 is arranged to detect and eliminate gaps G between two adjacent worked areas B. To achieve this, the plurality of virtual boom sections 25 can include at least one gap detector section, and preferably a plurality of gap detector sections. The gap detector sections are used to identify gaps G between a previously recorded worked area B and area of the field which is being recorded as worked area B. The plurality of virtual boom sections 25 can include at least one gap filler section, and preferably a plurality of gap filler sections. The gap filler sections are arranged to record the gaps G identified by the gap detector sections as worked area B, in response to the record system detecting that the gap detector section is wholly located in a worked area B. Thus the gap filler sections can be automatically switched on and off by the recording system 18 during a field operation. The end result is to fully connect the previously recorded worked area and the new area recorded as a work area, thereby eliminating the detected gaps G.

Typically the gap detector sections are the outermost virtual boom sections 25. The length L-6,L-7 of each of the gap detector sections, is preferably quite narrow for accurate detection of the gaps G between a previously recorded worked area B and a newly recorded worked are. The length L-6,L-7 of each gap detector section is typically greater than or equal to 5mm, is greater than or equal to 8mm, or is greater than or equal to 10mm. The length L-6,L-7 of each gap detector section is typically less than or equal to 20mm, less than or equal to 15mm, less than or equal to 12mm.

The plurality of virtual boom sections 25 can include a fourth virtual boom section 25-4, which comprises a gap filler section. The fourth virtual boom section 25-4 can be located on the first lateral side of the agricultural vehicle, typically in a position located further outwards than the second virtual boom section 25-2 in a direction that is transverse to the direction of travel DT of the agricultural machine. The plurality of virtual boom sections 25 can include a fifth virtual boom section 25-5, which comprises a gap filler section. The fifth virtual boom section 25-5 can be located on the second lateral side of the agricultural vehicle, typically in a position located further outwards than the third virtual boom section 25-3 in a direction that is transverse to the direction of travel DT of the agricultural machine.

The length L-4,L-5 of at least one of the fourth virtual boom section 25-4 and the fifth virtual boom section 25-5 can be approximately equal to the physical working width W of the agricultural machine. In some embodiments the length L-4,L-5 of at least one of the fourth virtual boom section 25-4 and the fifth virtual boom section 25-5 is approximately X x the length W of the pick-up mechanism, wherein X is in the range 0.5 to 1.5. In some embodiments the length L-4,L-5 of at least one of the fourth virtual boom section 25-4 and the fifth virtual boom section 25-5 is approximately X x the length of the pick-up mechanism, wherein L is in the range 0.75 to 1.25. In some embodiments the length L-4,L-5 of at least one of the fourth virtual boom section 25-4 and the fifth virtual boom section 25-5 depends on the distance Z between adjacent swaths A on the field. For example, the length L-4,L-5 of at least one of the fourth virtual boom section 25-4 and the fifth virtual boom section 25-5 can be M x the distance between the swaths A on the field, wherein M is in the range 0.1 to 0.6.

The plurality of virtual boom sections 25 can include a sixth virtual boom section 25-6, which comprises a gap detector section. The sixth virtual boom section 25-6 can be located on the first lateral side of the agricultural machine, typically in a position located further outwards than the fourth virtual boom section 25-4 in a direction that is transverse to the direction of travel DT of the agricultural machine. The plurality of virtual boom sections 25 can include a seventh virtual boom section 25-7, which comprises a gap detector section. The seventh virtual boom section 25-7 can be located on the second lateral side of the agricultural machine, typically in a position located further outwards than the fifth virtual boom section 25-5 in a direction that is transverse to the direction of travel DT of the agricultural machine.

Some possible configurations of the virtual boom sections 25 will now be discussed. However, it should be noted that the following configurations are some preferred configurations, however the invention is not to be considered as being limited to the following configurations since many other configurations can be used.

Figures 8 shows a configuration of a first virtual boom section 25-1, a second virtual boom section 25-2 and a third virtual boom section 25-3. Each of the first, second and third virtual boom sections 25-1,25-2,25-3 are arranged co-axially, thus conceptually can be considered to be a first virtual boom. The first virtual boom section 25-1 is located between the second and third virtual boom sections 25-2-25-3. The first virtual boom section 25-1 has a length L-1 that is equal to the length W of the pick-up mechanism 3, and hence is equal in length to the physical working width W of the agricultural machine 1. When viewed from the direction of travel DT of the agricultural machine, the first virtual boom section 25-1 is aligned with the pick-up mechanism 3. The longitudinal axis of each of the first, second and third virtual boom sections 25-1,25-2,25-3 is arranged perpendicular to the direction of travel DT of the agricultural machine 1, and is therefore parallel with the longitudinal axis of the pick-up mechanism 3. Each virtual boom section 25-1,25-2,25-3 is arranged end to end with at least one adjacent virtual boom section. Thus there are no gaps G between adj acent virtual boom sections in the direction that is perpendicular to the direction of motion of the agricultural machine when performing the field operation. The second virtual boom section 25-2 is located on the first lateral (e.g. left) side of the first virtual boom section 25-1, thereby extending beyond the physical working width of the agricultural machine on the first lateral side, and the third virtual boom section 25-3 is located on the second lateral (e.g. right) side of the first virtual boom section 25-1, thereby extending beyond the physical working width of the agricultural machine on the second lateral side. A first end of the second virtual boom section 25-2 abuts a first end of the first virtual boom section 25-1, and a first end of the third virtual boom section 25-3 abuts a second end of the first virtual boom section 25-1. In this configuration, and assuming that all of the virtual boom sections 25-1,25-2,25-3 are active, the virtual working width of the agricultural machine L is equal to the length L-1 of the first virtual boom section + the length L-2 of the second virtual boom section + the length L-3 of the third virtual boom section. The first virtual boom is located rearwards of the pick-up mechanism 3, in the direction of travel DT of the agricultural machine 1.

Figure 9 shows a virtual boom section configuration that is similar to the virtual boom configuration of Figure 8, except that the first virtual boom is located forwards of the pick-up mechanism 3 in the direction of travel of the agricultural machine.

While adjusting the position of the first virtual boom further forwards / further backwards in the direction of travel DT of the agricultural machine does not affect the width of a strip of field that is recorded as worked area B, it can affect the recording systems use of the virtual boom sections 25 in order to actuate / switch off agricultural machine devices 23 via the control system 17, for example raising / lowering of the pick-up mechanism 3. For example, the recording system 18 can be arranged to use the positioning system data for the worked areas B to determine if one of the virtual boom sections 25, for example the first virtual boom section 25-1, is approaching, or at, a border with an area that has previously been recorded as a worked area B, and in response to the termination triggers the control system 17 to automatically lift the pick-up mechanism 3 in order to prevent the worked area B from being worked a second time. It will be apparent that, if the first virtual boom section 25-1 is located in front of the pick-up mechanism 3, then the pick-up mechanism 3 can be raised prior to the pick-up mechanism 3 arriving at the previously worked area B. If the first virtual boom section 25-1 is located in rearwards of the pick-up mechanism 3, then the pick-up mechanism 3 will be raised after the pick-up mechanism 3 has entered the area previously recorded as worked area B.

Another possibility is that the first virtual boom section 25-1 overlies the pick-up mechanism.

Thus by careful positioning of the first virtual boom the operator is able to obtain the desired automatic triggering of agricultural machine devices 23.

Figure 10 illustrates the embodiment of Figure 8 performing a field operation. It can be seen that each of the first, second and third virtual boom sections 25-1,25-2,25-3 record worked area B of the field as worked areas as the agricultural machine travels along the swaths A. It is clear from Figure 10 that the working width recorded by the recording system 18 corresponds to the virtual working width L of the agricultural machine, which corresponds to the sum of the lengths L-1,L-2,L-3 of the first, second and third virtual boom sections 25-1,25-2,25-3, which is significantly wider than the physical working width W of the baler.

Figure 17 shows another configuration for a plurality of virtual boom sections 25 that can be used, which includes gap detector sections and gap filler sections, which enable gaps G between a previously recorded worked area B and a currently recorded worked area B to be identified and designated as worked area B in the recording system 18. The arrangement of Figure 17 includes the first virtual boom section 25-1, the second virtual boom section 25-2 and the third virtual boom section 25-3 of the arrangement shown in Figure 8. In addition, the configuration includes a fourth virtual boom section 25-4, a fifth virtual boom section 25-5, a sixth virtual boom section 25-6, and a seventh virtual boom section 25-7. The fourth and fifth virtual boom sections 25-4,25-5 are gap filler sections. The fifth and sixth virtual boom sections 25-6,25-7 are gap detector sections. The fourth virtual boom section 25-4 is located on the first lateral side of the second virtual boom section 25-2. A first end of the fourth virtual section 25-4 abuts a second end of the second virtual boom section 25-2. A first end of the fifth virtual boom section 25-5 abuts a second end of the third virtual boom section 25-3. The fifth virtual boom section 25-5 is located on the second lateral side of the third virtual boom section 25-3. The sixth virtual boom section 25-6 is located on the first lateral side of the fourth virtual boom section. The seventh virtual boom section 25-7 is located on the second lateral side of the fifth virtual boom section 25-5. A first end of the sixth virtual section 25-6 abuts a second end of the fourth virtual boom section 25-4. A first end of the seventh virtual boom section 25-7 abuts a second end of the fifth virtual boom section 25-5. Each of the first, second, third, fourth, fifth, sixth, and seventh virtual boom sections 25-1 to 25-7 are arranged co-axially, thus conceptually can be considered to be a first virtual boom.

Having gap detector sections and gap filler sections is particularly useful in the situation where the operator of the agricultural machine drives along the swaths A in a wavey pattern. This illustrated in Figure 11. The operator may do this because driving in a wavey pattern along the swaths A helps to form even bales in the bale chamber 13. However, a consequence of this is that gaps G can be formed between adjacent worked areas B. This is illustrated in Figure 12. The gap detector section and the gap filler sections can help mitigate against this problem.

During normal operation, the fourth, fifth, sixth and seventh virtual boom section 25-4 to 25-7 are normally not actuated, or are not taking part in the recording of the worked area, and therefore the virtual working width L of the agricultural machine is determined by the sum of the lengths L-1,L-2,L-3 of the first, second and third virtual boom sections 25-1,25-2,25-3. However, if the recording system 18 determines from the position data received from the positioning system that the sixth virtual boom section 25-6 is fully located in an area of the field that the recording system has recorded as worked area B, and the fourth virtual boom section 25-4 is not fully located in the previously recorded worked area B, the recording system 18 uses the sixth virtual boom section 25-6 and/or the fourth virtual boom section 25-4 to record worked area B, in addition to the first virtual boom section 25-1, the second virtual boom section 25-2 and the third virtual boom section 25-3, to record a new worked area B. This is illustrated in Figures 15, 17 and 20. This eliminates any gaps G that may have otherwise occurred between the previously recorded worked area B and the new worked area B being recorded. The recording system 18 can use data from a positioning system, such as a Global Positioning System (GPS), to determine if the sixth virtual boom section 25-6 is located in the previously worked area B.

If the recording system 18 determines from the position data received from the positioning system that the seventh virtual boom section 25-7 is fully located in an area of the field that the recording system has recorded as worked area B, and the fifth virtual boom section 25-5 is not fully located in the previously recorded worked area B, the recording system 18 uses the seventh virtual boom section 25-7 and/or the fifth virtual boom section 25-5 to record worked area B, in addition to the first virtual boom section 25-1, the second virtual boom section 25-2 and the third virtual boom section 25-3, to record a new worked area B. This eliminates any gaps G that may have otherwise occurred between the previously recorded worked area B and the new worked area B being recorded. The recording system can use data from a positioning system, such as a Global Positioning System (GPS), to determine if the seventh virtual boom section 25-7 is located in the previously worked area B.

Figure 20 illustrates that the HMI 19 has a gap control function GC, which can be selected by the operator. If the operator selects the gap control function GC, the recording system 18 automatically offers or selects one or more boom section configurations that include gap detector sections and gap filler sections. If the operator does not select, or deselects, the gap control function GC, the recording system 18 automatically offers or selects one or more virtual boom section configurations that do not include the gap detector sections and the gap filler sections.

Figure 13 shows the first virtual boom of Figure 17 having a first position relative to the agricultural machine 1. The first virtual boom section 25-1 is the central virtual boom section. When viewed from the direction of travel DT of the agricultural machine, the first virtual boom section 25-1 is aligned with the pick-up mechanism 3. The longitudinal axis of each of the first, second, third, fourth, fifth, sixth, and seventh virtual boom sections 25-1 to 25-7 is arranged perpendicular to the direction of travel DT of the agricultural machine 1, and is therefore parallel with the longitudinal axis W of the pick-up mechanism 3. Each virtual boom section 25-1 to 25-7 is arranged end to end with at least one adjacent virtual boom section. Thus there are no gaps G between adjacent virtual boom sections 25-1 to 25-7 in the direction that is perpendicular to the direction of motion of the agricultural machine when performing the field operation. The second, fourth and sixth virtual boom sections 25-2,25-4,25-6 are located on the first lateral side of the first virtual boom section 25-1 and extend beyond the physical working width of the agricultural machine on the first lateral side. The third, fifth and seventh virtual boom sections 25-3,25-5,25-7 are located on the second lateral side of the first virtual boom section 25-1 and extend beyond the physical working width of the agricultural machine on the second lateral side. The first virtual boom is located rearwards of the pick-up mechanism 3 in the direction of travel DT of the agricultural machine.

Figure 14 shows the first virtual boom of Figure 17 having a second position relative to the agricultural machine 1. The first virtual boom is located forwards of the pick-up mechanism 3 in the direction of travel DT of the agricultural machine.

Another possibility is that the first virtual boom section 22-1 overlies the pick-up mechanism.

In some configurations of the plurality of boom sections 25 the longitudinal axis of at least one of the virtual boom section can be offset from the longitudinal axis of at least one other virtual boom section in the direction of travel DT of the agricultural machine. Thus at least one virtual boom section 25 can be positioned further forward than another virtual boom section 25 in the direction of travel of the agricultural machine.

For example, Figure 22 shows a configuration having a first virtual boom 26 and a second virtual boom 28. The first virtual boom 26 comprises the first virtual boom section 25-1, the fourth virtual boom section 25-4, the fifth virtual boom section 25-5, the sixth virtual boom section 25-6 and the seventh virtual boom section 25-7. Each of the first, fourth, fifth, sixth, and seventh virtual boom sections 25-1,25-4,25-5,25-6,25-7 are arranged co-axially. The first virtual boom section 25-1 has a length L-1 that is equal to the physical working width W of the agricultural machine 1. The fourth and sixth virtual boom sections 25-4,25-6 are located on the first lateral side of the agricultural machine 1, and extend beyond the physical working width W of the agricultural machine. The fourth virtual boom section 25-4 is a gap filler section. The sixth virtual boom section 25-6 is a gap detector section. The sixth virtual boom section 25-6 is the outermost virtual boom section on the first lateral side of the agricultural machine 1. The fourth virtual boom section 25-4 is spaced apart from the first virtual boom section 25-1 along the first virtual boom 26 by a distance that is equal to the length L-2 of the second virtual boom section 25-2. The fifth and seventh virtual boom sections 25-5,25-7 are located on the second lateral side of the agricultural machine 1, and extend beyond the physical working width W of the agricultural machine. The fifth virtual boom section 25-5 is a gap filler section. The seventh virtual boom section 25-7 is a gap detector section. The seventh virtual boom section 25-7 is the outermost virtual boom section on the second lateral side of the agricultural machine 1. The fifth virtual boom section 25-5 is spaced apart from the first virtual boom section 25-1 along the first virtual boom 26 by a distance that is equal to the length L-3 of the third virtual boom section 25-5.

The second virtual boom 28 comprises the second virtual boom section 25-2 and the third virtual boom section 25-3. The second and third virtual boom sections 25-2,25-3 are arranged co-axially. The second and third virtual boom sections 25-2,25-3 are spaced apart along the second virtual boom 28 by a distance that is equal to the length L-1 of the first virtual boom section 25-1. The second virtual boom section 25-2 is located on the first lateral side of the agricultural machine, and extends beyond the physical working width W of the agricultural machine. The third virtual boom section 25-3 is located on the second lateral side of the agricultural machine, and extends beyond the physical working width W of the agricultural machine.

The first virtual boom 26 is located forwards of the second virtual boom 28 in the direction of travel DT of the agricultural machine. The longitudinal axes of the first, fourth, fifth, sixth, and seventh virtual boom sections 25-1,25-4,25-5,25-6,25-7 are arranged parallel with the longitudinal axes of the second and third virtual boom sections 25-2,25-3. The first and second virtual booms 26,28 are positioned such that, when viewed from the direction of travel DT, the second virtual boom section 25-2 is aligned with the space between the fourth virtual boom section 25-4 and the first virtual boom section 25-1, and such that the third virtual boom section 25-3 is aligned with the space between the fifth virtual boom section 25-5 and the first virtual boom section 25-1.

The configuration of Figure 22 can be positioned with respect to the agricultural machine such that, when viewed from the direction of travel DT of the agricultural machine 1, the first virtual boom section 25-1 is aligned with the pick-up mechanism. The first virtual boom 26 can be located forwards of the pick-up mechanism 3, overlie the pick-up mechanism 3, or can be located rearwards of the pick-up mechanism 3. The second virtual boom 28 can be located forwards of the pick-up mechanism 3, overlie the pick-up mechanism 3, or can be located rearwards of the pick-up mechanism 3.

Figure 23 shows a configuration of virtual boom sections 25 having a first virtual boom 26, a second virtual boom 28 and a third virtual boom 30. The first virtual boom 26 comprises the first virtual boom section 25-1. The first virtual boom section 25-1 has a length L-1 that is equal to the physical working width W of the agricultural machine 1. The first virtual boom section 25-1 is centrally located.

The second virtual boom 28 comprises the second virtual boom section 25-2 and the third virtual boom section 25-3. The second and third virtual boom sections 25-2,25-3 are arranged co-axially. The second and third virtual boom sections 25-2,25-3 are spaced apart along the second virtual boom 28 by a distance that is equal to the length L-1 of the first virtual boom section 25-1. The second virtual boom section 25-2 is located on the first lateral side of the agricultural machine, and extends beyond the physical working width W of the agricultural machine. The third virtual boom section 25-3 is located on the second lateral side of the agricultural machine, and extends beyond the physical working width W of the agricultural machine.

The third virtual boom 30 includes the fourth virtual boom section 25-4, the fifth virtual boom section 25-5, the sixth virtual boom section 25-6 and the seventh virtual boom section 25-7. Each of the fourth, fifth, sixth, and seventh virtual boom sections ,25-4,25-5,25-6,25-7 are arranged co-axially. The fourth and sixth virtual boom sections 25-4,25-6 are located on the first lateral side of the agricultural machine 1, and extend beyond the physical working width W of the agricultural machine. The fourth virtual boom section 25-4 is a gap filler section. The sixth virtual boom section 25-6 is a gap detector section. The sixth virtual boom section 25-6 is the outermost virtual boom section on the first lateral side of the agricultural machine 1. The fifth and seventh virtual boom sections 25-5,25-7 are located on the second lateral side of the agricultural machine 1, and extend beyond the physical working width W of the agricultural machine. The fifth virtual boom section 25-5 is a gap filler section. The seventh virtual boom section 25-7 is a gap detector section. The seventh virtual boom section 25-7 is the outermost virtual boom section on the second lateral side of the agricultural machine 1. The fourth virtual boom section 25-4 is spaced apart from the fifth virtual boom section 25-5 along the third virtual boom 30 by a distance that is equal to the sum of the lengths L-1,L-2,L-3 of the first, second and third virtual boom sections 25-1,25-2,25-3.

The first virtual boom 26 is located forwards of the second virtual boom 28 in the direction of travel DT of the agricultural machine, and the second virtual boom 28 is located forwards of the third virtual boom 30 in the direction of travel DT of the agricultural machine 1. The longitudinal axis of the first virtual boom section 25-1, is arranged parallel with the longitudinal axes of the second and third virtual boom sections 25-2,25-3, and the longitudinal axes of the fourth, fifth, sixth, and seventh virtual boom sections 25-4,25-5,25-6,25-7. The first and second virtual booms 26,28 are positioned such that, when viewed from the direction of travel DT, the first virtual boom section 25-1 is aligned with the space between the second virtual boom section 25-2 and the third virtual boom section 25-3. The third virtual boom 30 is positioned such that, when viewed from the direction of travel DT of the agricultural machine, the first, second and third virtual boom sections 25-1,25-2,25-3 are aligned with the space between the fourth virtual boom section 25-4 and the fifth virtual boom section 25-5.

The configuration of Figure 23 can be positioned with respect to the agricultural machine such that, when viewed from the direction of travel DT of the agricultural machine 1, the first virtual boom section 25-1 is aligned with the pick-up mechanism. The first virtual boom 26 can be located forwards of the pick-up mechanism 3, overlie the pick-up mechanism 3, or can be located rearwards of the pick-up mechanism 3. The second virtual boom 28 can be located forwards of the pick-up mechanism 3, overlie the pick-up mechanism 3, or can be located rearwards of the pick-up mechanism 3. The third virtual boom 30 can be located forwards of the pick-up mechanism 3, overlie the pick-up mechanism 3, or can be located rearwards of the pick-up mechanism 3.

Figure 24 shows a configuration comprising a first virtual boom 26 and a second virtual boom 26. The first virtual boom 26 comprises a first virtual boom section 25-1. The first virtual boom section is located centrally along the first virtual boom 26. The first virtual boom section 25-1 has a length L-1 that is equal to the physical working width W of the agricultural machine.

The second virtual boom 28 is arranged according to the arrangement shown in Figure 17, and as described above.

The first virtual boom 26 is located forwards of the second virtual boom 28 in the direction of travel DT of the agricultural machine. The longitudinal axis of the first virtual boom section 25-1 in the first virtual boom 26 is arranged parallel with the longitudinal axes of the first, second, third, fourth, fifth, sixth, and seventh virtual boom sections 25-1 to 25-7 of the second virtual boom 28. The first and second virtual booms 26,28 are positioned such that, when viewed from the direction of travel DT, the first virtual boom section 25-1 of the first virtual boom 26 is aligned with first virtual boom section 25-1 of the second virtual boom 28.

The configuration of Figure 24 can be positioned with respect to the agricultural machine such that, when viewed from the direction of travel DT of the agricultural machine 1, the first virtual boom section 25-1 of the first virtual boom 26, and the first virtual boom section 25-1 of the second virtual boom 28, are aligned with the pick-up mechanism 3. The first virtual boom 26 can be located forwards of the pick-up mechanism 3, overlie the pick-up mechanism 3, or can be located rearwards of the pick-up mechanism 3. The second virtual boom 28 can be located forwards of the pick-up mechanism 3, overlie the pick-up mechanism 3, or can be located rearwards of the pick-up mechanism 3.

An advantage of having a plurality of virtual booms 26,28,30 is that it is possible to have different settings for each virtual boom 26,28,30 for example a turn on time can be set for each virtual boom. The turn on time can define the time at which, prior to the agricultural machine 1 reaching a border between worked area B and non-worked area, an action, such as pick-up mechanism 3 disengagement, should be performed to complete that action at the time when the pick-up mechanism 3 arrives at the worked area B. Performing an action like pick-up mechanism 3 disengagement takes time to happen (delay) after initiation, and the turn on time adapts to that delay. A turn on time may be defined in time (for example seconds) and may also be defined in distance (for example metres). Another advantage of using multiple booms 26,28,30 is that the operator may define an offset trigger for the worked area B registration: one virtual boom can be used for triggering recording and another virtual boom (virtually placed in offset, on another position relative to a first virtual boom) can be used to trigger start of functions and operational procedures of the baler. For example, the configurations described above in relation to Figures 22 to 24 can address a problem wherein swaths A are positioned close to one another, for example when a swath A running horizontally along a field in Figure 21 intersects with a swath A running vertically along the field in Figure 21, it is possible that when picking up crops from the horizontal swath A that a part of the vertical swath A will be recorded as worked area B based on the virtual working width of the agricultural machine when in fact that area of the vertical swath A has not been treated by the baler. In this situation, when the baler picks up material from the vertical swath A, and approaches the area of the vertical swath A that is recorded as a worked area B, the control system will automatically raise the pick-up mechanism 3 thereby leaving some crop on the field. A configuration having a first virtual boom 26 comprising the first virtual boom section 25-1, which is overlayed onto the physical pick-up mechanism 3, and a second virtual boom 28 comprising the second virtual boom section 25-2 and the third virtual boom section 25-3, wherein the second virtual boom 28 is offset rearwards from the first virtual boom 26 in the direction of travel of the agricultural machine (e.g. see Figure 22) can mitigate the trigger problem, since the second virtual boom 28 approaching the border between recorded worked area B and non-recorded area can be used to trigger the control system 17 to lift the pick-up mechanism 3. Since the second virtual boom 28 is located rearwards of the physical pick-up mechanism 3, the physical pick-up mechanism 3 is able to pick up the crop from that part of the vertical swath A that has previously been recorded as worked area B prior to the control system 17 automatically raising the pick-up mechanism 3. In the arrangement, the distance in the direction of travel DT of the agricultural machine 1 between the first virtual boom 26 and the second virtual boom 28 is preferably equal to the length L-2,L-3 of at least one of the second virtual boom section 25-2 and the third virtual boom section 25-3. Typically, the length L-2 of the second virtual boom section 25-2 is equal to the length L-3 of the third virtual boom section 25-3. Thus, the pick-up mechanism 3 is lifted by the control system 17 when the recording system 18 determines that the second virtual boom 28 recognizes the previously worked area B of the vertical swath A, meaning the pick-up mechanism 3 lift is delayed by a distance equal to the distance between the first and second virtual booms 26,28.

A further advantage of having a plurality of virtual booms is that it is possible to store in memory separate data sets for each virtual boom, and to use those data sets independently of one another, for example to calculate maintenance intervals for the baler 1. For example, with reference to the arrangement shown in Figure 24.

The first virtual boom 26 comprises only the first virtual boom section 25-1. Thus, the first virtual boom 26 can record only the physical worked area B of the pick-up mechanism 3 and the worked area B is stored in a memory associated with that virtual boom 24. The recorded area does not need to be used for the pick-up mechanism 3 trigger for example.

The second virtual boom 28 includes first, second, third, fourth, fifth, sixth and seventh virtual boom sections 25-1 to 25-7. The second virtual boom 28 can record worked area B from all of those virtual boom sections 25-1 to 25-7, including those that are used for virtual worked area B gap control. The results are stored in a memory associated with the second boom 28, which is a different memory or memory location from the memory used to store worked area B data from the first virtual boom 26. This recorded area may be used for triggering the pick-up mechanism 3.

By having separate data sets recorded for each virtual boom 26,28 there are two data sets that are separate from each other but are based on the same section. Therefore, it is possible to use both datasets separately from each other, and for different purposes, for example for determining maintenance intervals for the pick-up 3 / baler 1 in general, where those maintenance intervals are not depending on the virtual working width.

If, for example, the second virtual boom 28 is set to record the worked area B of the baler, and the first virtual boom section 25-1 of the second virtual boom 28 is turned off for any reason, then the first virtual boom section 25-1 of the first boom 26 still records worked area B in the background so correct maintenance intervals for the baler are calculated.

Other solutions to the problem described above in relation to Figure 21, include the recording system 18 having means for inhibiting, at least temporarily, the agricultural machine control system 17 from automatically controlling at least one function of the agricultural machine 1 in response to the recording system 18 determining from the data received from the positioning system 21 that the agricultural machine is approaching a border between an area previously recorded as worked area B and an area that has not previously been recorded as worked area B. For example, the means for inhibiting, at least temporarily, the agricultural machine control system from automatically controlling at least one function of the agricultural machine can comprise a control, such as a switch, button, or icon on a touch screen, which is arranged to enable an operator to switch off /on the second virtual boom section 25-2 from recording areas of the field as worked area B.

The means for inhibiting, at least temporarily, the agricultural machine control system 17 from automatically controlling at least one function of the agricultural machine can comprise a control, such as a switch, button, or icon on a touch screen, which is arranged to enable an operator to switch off /on the third virtual boom section 25-3 from recording areas of the field as worked area B.

The means for inhibiting, at least temporarily, the agricultural machine control system from automatically controlling at least one function of the agricultural machine can comprise a delay setting, which is arranged to delay the control system 17 from automatically controlling at least one function of the agricultural machine 23, such as raising/lowering of the pick-up mechanism 3, after a trigger signal has been received. The delay setting can delay the action occurring, for example, for a predetermined period of time, or for a predetermined distance travelled by the agricultural machine. The delay setting can be a fixed delay, which can be preprogrammed into the system. Alternatively, the delay setting can be set by an operator, for example via the HMI 19.

The means for inhibiting, at least temporarily, the agricultural machine control system from automatically controlling at least one function of the agricultural machine can comprise a control, such as a switch, button, or icon on a touch screen, which is arranged to override the control system 17, thereby preventing the control system 17 from automatically performing an operation such as raising/lowering the pick-up mechanism 3 in response to a received trigger signal. For example, if the control system 17 tries to automatically raise the pick-up mechanism 3 because the recording system has determined that the agricultural machine has reached a border of previously recorded worked area B, when in fact there is still crop located in the swath A in the area previously recorded as worked area B, the operator is able to override the control system 17 by operating the control to manually lower the pick-up mechanism 3.

In some embodiments, the recording system 18 can be arranged to detect the geographical positions on the field where an operator has overridden the control device, from data received from the positioning system 21, and where there is a repeated overriding at a particular location on the field, the recording system 18 can learn not to issue a trigger signal to the control system 17 to lift the pick-up mechanism 3 at that location.

In some embodiments, the recording system 18 is arranged to automatically determine the distance between adjacent swaths A from the worked area B positioning system coordinates, and the recording system 18 is arranged to adjust the current virtual working width of the agricultural machine to match the determined distance between adjacent swaths A. For example, the recording system 18 can be arranged to compare the current virtual working width L of the agricultural machine, based on the lengths L-1,L-2,L-3 of the first virtual boom section 25-1, the second virtual boom section 25-2, and the third virtual boom section 25-3, with the determined distance Z between the adjacent swaths A, and in a condition wherein the current virtual working width L of the agricultural machine does not match the determined distance Z between the adjacent swaths A, for example within a predetermined tolerance, the control system 17 is arranged to adjust the current virtual working width L of the agricultural machine to match the determined distance Z between adjacent swaths A. To achieve this, the recording system 18 can be arranged to automatically adjust the length of at least one virtual boom section 25-1 to 25-7. For example, the recording system 18 can be arranged to automatically adjust the length L-2,L-2 of at least one of the second virtual boom section 25-2 and the third virtual boom section 25-3. The automatic determination can be performed periodically at a suitable period to prevent constant readjustment of the virtual working width L the agricultural machine. The recording system 18 can use TC-SC functionality of the control system 17 to automatically determine the distance Z between adjacent swaths A and, in response to determining the distance Z between adjacent swaths A, to automatically adjust the virtual working width L of the agricultural machine.

By driving over the field, the record system records the worked area B. The recording of the worked area B is related to the GPS coordinates of the worked area B, so the TS-SC controller is able to determine the distance between the swaths A from the paths that have been driven. The TS-SC controller can determine if it is necessary to change the default value of the distance between the swaths A. In some embodiments, if the TS-SC controller detects a lot of gaps G being present between the worked area Bs, the TS-SC controller can adjust, for example increase, the length L-2,L-3 of the left and right filler sections (the second virtual boom section 25-2 and the third virtual boom section 25-3). In some embodiments, if the TS-SC controller detects a lot of overlaps or adjacent work areas, the controller can adjust, for example decrease, the length L-2,L-3 of the left and right filler sections (the second virtual boom section 25-2 and the third virtual boom section 25-3). Thus, in some embodiments, the recording system 18 is able to automatically adjust the length L-2,L-3 of the second virtual boom section 25-2 and/or the third virtual boom section 25-3, during a field operation, in response to the recording system 18 determining that the size and/or number of gaps G produced between adjacent work areas is greater than or equal to a threshold value. In some embodiments, the recording system 18 is able to automatically adjust the length L2-L3 of the second virtual boom section 25-2 and/or the third virtual boom section 25-3, during a field operation, in response to the recording system 18 determining that the size and/or number of overlaps produced by adjacent work areas is greater than or equal to a threshold value.

The agricultural machine control system 17 is arranged to automatically control at least one function of the agricultural machine in response to the agricultural machine recording system 18 determining from the data received from the positioning system that the agricultural machine 1 is approaching a border between an area previously recorded as worked area B and an area that has not previously been recorded as worked area B. For example, the agricultural machine control system 17 can be arranged to automatically move the pick-up mechanism 3 from a working position in which the pick-up 3 is positioned close to the ground for collecting the crops from the swath A, to a non-working position in which the pick-up 3 is positioned above the ground to avoid collecting crops from the swath A, in a condition wherein the control system 17 determines from the data received from the positioning system that the agricultural machine 1 is approaching/entering an area of the field that has been recorded as worked area B by the recording system 18. The agricultural machine control system 17 can be arranged to automatically move the pick-up mechanism 3 from a non-working position in which the pick-up 3 is positioned above the ground, to a working position in which the pick-up mechanism 3 is positioned close to the ground to collect crops from the swath A, in a condition wherein the control system 17 determines from the data received from the positioning system that the agricultural machine 1 is approaching/entering an area of the field that is a non-worked area.

The control system 17 can be triggered to operate other devices 23. In one embodiment, the control system 17 can be arranged to automatically commence a rotor knife device cleaning operation, for example in a condition wherein the control system 17 determines from the data received from the positioning system that the agricultural machine 1 is approaching/entering an area of the field that has been recorded as worked area B by the recording system.

The recording system 18 can be arranged to generate a map of the worked area B. The recording system 18 can be arranged to use the data from the positioning system 21 to determine the location of the worked area Bs on the field. The positioning data for the agricultural machine and data regarding the arrangement of the virtual boom, or the virtual boom sections, can be used to create the map the worked area B(s).

The recording system can be arranged to overlay the map of the worked area B(s) on to an existing map of the field. The recording system 18 can be arranged to display the map of the worked area B(s) and/or the existing map of the field on the HMI display screen.

The recording system 18 can be arranged to commence recording worked area B in response to at least one operational condition of the agricultural machine being met. For example, in some embodiments the recording system 18 will only commence recording worked area B in response to the recording system 18 determining that the pick-up mechanism 3 is located in its operative position close to the ground. The recording system 18 can be arranged to not commence recording worked area B in response to at least one operational condition of the agricultural machine being met. For example, in some embodiments the recording system 18 will not commence recording worked area B in the event that the recording system 18 determines that the pick-up mechanism 3 is located in its non-operative position above the ground. Other suitable operational conditions of the agricultural machine 1 can be used to trigger / prevent the recording system 18 from commencing recording worked area B. In some embodiments, at all times and in all scenarios, the operator is allowed and is able to override the pick-up mechanism 3 position from the automatic pick-up lift according to recognizing worked and non-worked area by the TC-SC. This is done by the operator pressing functions buttons/icons for pick-up mechanism lift and pick-up mechanism lower (see Figure 18).

A method of performing a field operation will now be described.

The operator drives the agricultural machine to the field for performing the field operation, which comprises picking up crops from swaths A previously laid down on the field, for example by a harvester and/or a raking machine 100.

The operator switches on the recording system 18.

The operator enters the distance between the swaths A in to the HMI 19, or decides to use a default value previously entered in the controller.

The operator engages the pick-up device 3 of the agricultural machine 1 into work, lowering to the ground and/or switching on/the mechanism.

The operator drives the agricultural machine 1 over the field, following the swaths A so that crop in the swaths A is picked up by the pick-up mechanism 3 agricultural machine 1.

The recording system 18 records the worked area B according to the TC-SC virtual boom sections in operation, based on a virtual working width of the agricultural machine that is greater than the physical working width of the agricultural machine, such that at least part of the worked area B recorded by the recording system 18 is located beyond the physical working width of the agricultural machine.

Optionally, the operator may select the gap control function GC. In a method wherein the gap control function GC is activated by the operator, the recording system 18 records gaps G that are detected as worked area B.

During the recording, the recording system 18 may decide to alter the distance Z between the swaths A and also may decide to alter the default value for the distance Z between the swaths A, based on detection of the path the agricultural machine is driving on the field.

When the baler approaches a previously recorded worked area B, the pick-up mechanism 3 is lifted automatically by the control system 17 and/or other baler functions like PTO speed decrease and/or rotor knife cleaning can be performed automatically by the control system.

It will be appreciated that the above examples can be modified while still falling within the scope of the invention. For example, while in the embodiment above the recording system is an application that interacts with an agricultural machine control system, instead the work area recording system can comprise a dedicated recording system, which is entirely separate from the agricultural machine control system.

The description presents exemplary embodiments and, together with the drawings, serves to explain principles of the invention. However, the scope of the invention is not intended to be limited to the precise details of the embodiments or exact adherence with all method installation steps, since variations will be apparent to a skilled person and are deemed also to be covered by the claims. Terms for components used herein should be given a broad interpretation that also encompasses equivalent functions and features. In some cases, several alternative terms (synonyms) for structural features have been provided but such terms are not intended to be exhaustive.

Descriptive terms should also be given the broadest possible interpretation; e.g. the term "comprising" as used in this specification means "including" such that interpreting each statement in this specification that includes the term "comprising", features other than that or those prefaced by the term may also be present. Related terms such as "comprise" and "comprises" are to be interpreted in the same manner. Directional terms such as "vertical", "horizontal", "up", "down", "upper" and "lower" may be used for convenience of explanation usually with reference to the illustrations and are not intended to be ultimately limiting if an equivalent function can be achieved with an alternative dimension and/or direction.

The description herein refers to embodiments with particular combinations of configuration steps or features, however, it is envisaged that further combinations and cross-combinations of compatible steps or features between embodiments will be possible. Indeed, isolated features may function independently as an invention from other features and not necessarily require implementation as a complete combination. Any feature from an embodiment can be isolated from that embodiment and included in any other embodiment.

The term "at least one of" is to be interpreted in the sense of "and/or". For example, the term "at least one of X and Y" is to be interpreted as meaning any one of the following: X alone; Y alone; or the combination of X and Y. As another example, the term "at least one of X, Y and Z" is to be interpreted as meaning any one of the following: X alone; Y alone; Z alone; the combination of X and Y; the combination of transmission X and Z; the combination of Y and Z; or the combination of X, Y, Z.

## Claims

1. An agricultural machine arranged to perform an agricultural field operation comprising picking up harvested crop from a swath, the agricultural machine comprising:
a pick-up mechanism arranged to pick up the harvested crop from the swath, the pick-up mechanism having a working width that defines a physical working width of the agricultural machine; and
a recording system arranged to record a worked area of the field as the agricultural machine performs the field operation, wherein the recording system is arranged to determine the worked area from a virtual working width for the agricultural machine, which is greater than the physical working width of the agricultural machine, such that at least part of the worked area recorded by the recording system is located beyond the physical working width of the agricultural machine.

2. The agricultural machine of claim 1, wherein the virtual working width of the agricultural machine is defined by at least one virtual boom section; optionally the virtual working width of the agricultural machine is defined by a plurality of virtual boom sections.

3. The agricultural machine of claim 2, wherein the plurality of virtual boom sections includes a first virtual boom section, a second virtual boom section and a third virtual boom section, wherein the first virtual boom section has a length that is equal to the physical working width of the agricultural machine and has a first virtual position that is aligned with the physical position of the pick-up mechanism in the direction of travel of the agricultural machine when performing the field operation.

4. The agricultural machine of claim 2 or 3, wherein there are no gaps between adjacent virtual boom sections in the direction that is perpendicular to the direction of motion of the agricultural machine when performing the field operation; for example, each virtual boom section is arranged end to end with at least one adjacent virtual boom section.

5. The agricultural machine of any one of the preceding claims, wherein the recording system includes a gap control function, wherein the recording system is arranged to detect and eliminate gaps between two adjacent worked areas.

6. The agricultural machine of any one of claims 3 to 5, wherein the plurality of virtual boom sections includes a fourth virtual boom section and a fifth virtual boom section, wherein the fourth virtual boom section is located on the first lateral (e.g. left) side of the second virtual boom section; and the fifth virtual boom section is located on the second lateral (e.g. right) side of the third virtual boom section.

7. The agricultural machine of claim 6, wherein the plurality of virtual boom sections includes a sixth virtual boom section and a seventh virtual boom section, wherein the sixth virtual boom section is located on the first lateral (e.g. left) side of the fourth virtual boom section; and the seventh virtual boom section is located on the second lateral (e.g. right) side of the fifth virtual boom section.

8. The agricultural machine of claim 7, wherein the recording system is arranged to determine if the sixth and/or seventh virtual boom section is located in a previously worked area, and in response to determining that the sixth virtual boom section is located in a previously worked area using at least one of the sixth virtual boom section and the fourth virtual boom section, in addition to the first virtual boom section, the second virtual boom section and the third virtual boom section, to record a new worked area; and in response to determining that the seventh virtual boom section is located in a previously worked area using at least one of the seventh virtual boom section and the fifth virtual boom section, in addition to the first virtual boom section, the second virtual boom section and the third virtual boom section, to record a new worked area.

9. The agricultural machine of any one of the preceding claims, wherein the recording system is a module of at least one of: an agricultural machine control system, a tractor control system, and an agricultural machine independent controller.

10. The agricultural machine of claim 9, wherein the agricultural machine control system comprises ISOBUS Task Controller Section Control (TS-SC) functionality, and the recording system uses the ISOBUS Task Controller Section Control (TS-SC) functionality to define the virtual working width of the agricultural machine and to record the worked area based on the virtual working width of the agricultural machine.

11. The agricultural machine of any one of the preceding claims, including a positioning system, such as a Global Positioning System (GPS), wherein at least one of the recording system and the agricultural machine control system is arranged to receive data from a positioning system, which determines the position of the agricultural machine in the field, wherein the recording system is arranged to relate the recorded worked area to positioning system coordinates.

12. The agricultural machine of claim 11, wherein the recording system is arranged to automatically determine the distance between adjacent swaths from the worked area positioning system coordinates, and the recording system is arranged to adjust the current virtual working width of the agricultural machine to match the determined distance between adjacent swaths.

13. The agricultural machine of any one of claims 9 to 12, wherein the agricultural machine control system is arranged to automatically control at least one function of the agricultural machine, or to inhibit, at least temporarily, the agricultural machine control system from automatically controlling at least one function of the agricultural machine, in response to the agricultural machine recording system determining from the data received from the positioning system that the agricultural machine is approaching a border between an area previously recorded as worked area and an area that has not previously been recorded as worked area; optionally the at least one function can be selected from: moving the pick-up from a working position to a non-working position, moving the pick-up from a non-working position to a working position, and commencing a rotor knife device cleaning operation.

14. The agricultural machine of any one of the preceding claims, including a human to machine interface (HMI), which is arranged to enable an operator to define a virtual working width for the agricultural machine, and/or wherein the HMI is arranged to enable an operator to activate and deactivate the gap control function.

15. The agricultural machine of any one of the preceding claims, wherein the recording system is arranged to generate a map of the worked area(s).

16. The agricultural machine of any one of the preceding claims, wherein the recording system is arranged to commence recording worked area in response to at least one operational condition of the agricultural machine being met.

17. A method for performing an agricultural field operation by an agricultural machine, the method comprising:
providing an agricultural machine having a pick-up mechanism, the pick-up defining a physical working width of the agricultural machine;
picking up harvested crops from a swath using the pick-up mechanism,
recording a worked area for the agricultural machine during the field operation by a recording system, wherein the recording system is arranged to determine the worked area from a virtual working width for the agricultural machine, which is greater than the physical working width of the agricultural machine, such that at least part of the worked area recorded by the recording system is located beyond the physical working width of the agricultural machine.
